(19) Europäisches Patentamt
European Patent Office
Office européen des brevets

(11) **EP 4 379 252 A1**

(12) **EUROPÄISCHE PATENTANMELDUNG**

(43) Veröffentlichungstag:
**05.06.2024  Patentblatt 2024/23**

(21) Anmeldenummer: **23211651.7**

(22) Anmeldetag: **23.11.2023**

(51) Internationale Patentklassifikation (IPC):
**F16T 1/22** (2006.01)          **F16T 1/48** (2006.01)

(52) Gemeinsame Patentklassifikation (CPC):
**F16T 1/22; F16T 1/48**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **01.12.2022  DE 102022131861**

(71) Anmelder: **HPS Home Power Solutions AG**
**12489 Berlin (DE)**

(72) Erfinder:
• **BANHARDT, Christoph**
  **10365 Berlin (DE)**
• **SCHNEIDER, Gunnar**
  **15745 Wildau (DE)**
• **SCHULZ, Sascha**
  **10247 Berlin (DE)**

(74) Vertreter: **Müller, Thomas**
**Boschetsrieder Straße 20**
**81379 München (DE)**

(54) **KONDENSATABLAUFEINRICHTUNG UND VERFAHREN ZU DEREN BETRIEB**

(57)     Die vorliegende Erfindung betrifft unter anderem ein Verfahren, bei dem in einem, insbesondere strömendem, gasförmigen Medium anfallendes Kondensat (88) in einer Kondensatablaufeinrichtung (70) gesammelt und aus dieser abgeführt wird. Die Kondensatablaufeinrichtung (70) weist auf einen nach oben offenen Kondensatbehälter (72), der einen Aufnahmeraum (73) aufweist, der nach unten durch einen Behälterboden (74), seitlich durch eine Behälterseitenwandung (75) und nach oben durch einen oberen Abschluss (76) mit einer Behälteröffnung (76a) begrenzt ist, einen Kondensatzulauf (77) im oberen Abschluss (76) des Kondensatbehälters (72), der durch die Behälteröffnung (76) gebildet ist, einen Kondensatablauf (78) im unteren Bereich des Kondensatbehälters (72), über den im Kondensatbehälter (72) angesammeltes Kondensat (88) abgeführt wird, und einen Aufschwimmkörper (82) im Aufnahmeraum (73) des Kondensatbehälters (72). Die maximale Ausdehnung (76b) der Behälteröffnung (76a) größer als die maximale Ausdehnung (83) des Aufschwimmkörpers (82) In dem gasförmigen Medium vor dem Kondensatzulauf (77), an dem ein höheres Druckniveau (86) anliegt als das Druckniveau (87), welches außen an dem Kondensatablauf (78) anliegt, anfallendes Kondensat (88) tritt über den Kondensatzulauf (77) in den Aufnahmeraum (73) des Kondensatbehälters (72) ein, in dem sich der Aufschwimmkörper (82) zunächst in einer unteren Schließposition (84) befindet und den Kondensatablauf (78) verschließt. Der Aufschwimmkörper (82) bewegt sich aus seiner unteren Schließposition (84) in eine obere Öffnungsposition, wenn die Bedingung erfüllt ist, dass die Auftriebskraft des Aufschwimmkörpers (82) größer ist als die auf den Aufschwimmkörper (82) einwirkenden Gegenkräfte. Der Kondensatablauf (78) wird freigegeben und das im Kondensatbehälter (72) befindliche Kondensat (88) fließt über den Kondensatablauf (78) aus dem Kondensatbehälter (72) ab.

**Fig. 6**

**Beschreibung**

Die vorliegende Erfindung betrifft zunächst ein Verfahren zum Ableiten von aus einem gasförmigen Medium abgeschiedenem Kondensat gemäß dem Oberbegriff von Patentanspruch 1. Weiterhin betrifft die Erfindung eine Kondensatablaufeinrichtung gemäß dem Oberbegriff von Patentanspruch 7, eine Systemkomponente eines Systems mit einer derartigen Kondensatablaufeinrichtung, sowie ein Energiesystem.

Energiesysteme der gattungsgemäßen Art sind im Stand der Technik bereits auf vielfältige Weise bekannt. Mit derartigen Systemen wird üblicherweise Energie für verschiedenste Anwendungsgebiete erzeugt und bereitgestellt.

Bei einer bekannten Art solcher Energiesysteme handelt es sich um ein Gebäudeenergiesystem, mittels dessen Energie in verschiedenen Formen für das Gebäude bereitgestellt wird.

Damit solche Energiesysteme möglichst umfassend, beispielsweise in Form von Gebäudeenergiesystemen, eingesetzt werden können, ist es im Stand der Technik bereits bekannt geworden, ein wie vorstehend beschriebenes Energiesystem um ein Lüftungssystem zu erweitern. Das Lüftungssystem hat insbesondere die Funktion, in einem Raum eines Gebäudes ein gewünschtes Raumklima zu erzeugen, beispielsweise indem der Raum entsprechend belüftet und/oder geheizt und/oder gekühlt und/oder befeuchtet und/oder entfeuchtet wird. Das Lüftungssystem kann im Betrieb auf Prozesse des Energiesystems zurückgreifen. Ein solches bekanntes Lüftungssystem ist beispielsweise in der DE 10 2018 133 194 A1 der Anmelderin offenbart. Bei dieser bekannten Lösung tritt ein über eine Außenluftzufuhr bereitgestellter Zuluftstrom in eine Systemkomponente des Lüftungssystems ein. Über einen Wärmeübertrager in der Systemkomponente wird eine Zuluftzufuhr erzeugt und dem Raum als Zuluft bereitgestellt. Aus dem Raum abgeführte Abluft wird über eine Abluftabfuhr als Abluftstrom über den Wärmeübertrager geführt und als Fortluftstrom über eine Fortluftabfuhr aus dem Lüftungssystem abgeführt.

Bei derartigen Energiesystemen und Lüftungssystemen handelt es sich um kompakte Systeme, in denen die einzelnen Komponenten effizient genutzt werden. Durch eine Mehrfachnutzung einzelner Komponenten in verschiedenen Prozessen oder für verschiedene Prozesse können zudem Herstellungskosten des Systems reduziert werden. Auch können an einzelnen Stellen des Systems entstehende Prozessresultate, die ansonsten als "Abfallprodukte" behandelt würden, in manchen Fällen noch für an anderen Stellen des Systems ablaufende Prozesse als "Ausgangsprodukte" beziehungsweise "Prozessprodukte" genutzt werden. Zu denken ist hier beispielsweise an entstehende Luftströme, Wärme und dergleichen. So kann beispielsweise die im Lüftungssystem entstehende Abluft auch als Zuluft für das Brennstoffzellensystem verwendet werden.

An verschiedenen Stellen des Energiesystems beziehungsweise des Lüftungssystems entsteht während des Ablaufs der Prozesse Kondensat, das beispielsweise in feuchten Gasströmen anfällt. Dieses Kondensat muss abgeführt werden. Dazu kommen geeignete Kondensatablaufeinrichtungen zum Einsatz.

Vorbekannt sind Kondensatablaufeinrichtungen in Form sogenannter "Sonder-/ Kugelsiphone", bei denen eine Kugel eingesetzt wird, deren Gewicht oder deren stehende Wassersäule so abgestimmt ist, dass bei dem größten zu erwartenden Druck auf der Druckseite der Siphon verschlossen ist und erst durch eine stehende Wassersäule vor der Verschlusskugel genügend Druck aufgebaut wird um den Siphon zu öffnen und angestautes Wasser abzulassen. Derartige Sondersiphone sind beispielsweise in der DE 20 2005 019 783 U1 oder der DE 20 2013 009 509 U1 beschrieben. Die bekannten Sondersiphone weisen eine Reihe von Nachteilen auf, wie beispielsweise einen großen Platzbedarf, das Vorhandensein vieler Einzelteile, eine wackelige Konstruktion, eine Fehleranfälligkeit im Zusammenbau oder bei der richtigen Auswahl der Kugel, ein mögliche Havarie bei zu schwerer Kugel, so dass es zu keinem Kondensatabfluss kommt, oder eine mögliche Störung des Nutzers bei zu leichter Kugel, etwa aufgrund eines Klapperns bei hohen Drücken.

In der DE 718589 A ist eine Entwässerungseinrichtung für eine Dampferzeugungsanlage beschrieben. Diese weist einen zylindrischen Körper auf, in dem ein ebenfalls zylindrischer Schwimmköper gelagert ist. Zwischen zwei trichterförmigen Böden des Schwimmkörpers erstreckt sich ein Verbindungsrohr. In der Dampferzeugungsanlage entstehendes Kondensat tritt über den oberen Boden durch das Verbindungsrohr hindurch und verlässt den Schwimmkörper über den unteren Boden. Das Kondensat sammelt sich unter dem Schwimmkörper und drückt diesen nach oben, wodurch seitliche Kondensatablauföffnungen freigegeben werden. Der Schwimmkörper ist über Dichtringe gegen den zylindrischen Körper abgedichtet.

Die DE 3319196 A1 offenbart eine Vorrichtung zum Ablassen von Kondenswasser aus einem Druckluftsammelbehälter. Die Vorrichtung weist einen geschlossenen Behälter auf, in dessen oberem Bereich sich seitlich eine Zuleitung befindet. Im Bodenbereich befindet sich ein Schwimmer. Kondensat tritt über die Zuleitung in den Behälter ein und tropft nach unten Ist genug Kondensat im Behälter vorhanden, schwimmt der Schwimmer auf und gibt eine Auslassöffnung im Behälterboden frei, über die das Kondensat ablaufen kann.

Aus der EP 2 447 591 B1 ist eine Kondensatablaufeinrichtung für ein Brennstoffzellensystem bekannt. In einem Kondensatbehälter, der ein Aufnahmegefäß bildet, befindet sich im Boden ein Kondensatablauf und im Deckenbereich ein Kondensatzulauf. Der Kondensatablauf ist mit einem kugelförmigen Aufschwimmkörper verschlossen, der auf einer ringförmigen Dichtung aufliegt. Das Gewicht des Aufschwimmkörpers ist so bemessen, dass er durch die aus der Differenz zwischen Umgebungsdruck der Umgebung und der im Brennstoffzellensystem und damit auch im Kondensatbehälter herrschenden Unterdruck resultierende Druckkraft nicht angehoben wird. Durch sich im Kondensatbehälter sammelndes Kondensat steigt der Flüssigkeitsspiegel im Kondensatbehälter an, bis der Aufschwimmkörper aufgrund der zunehmenden Verdrängung aufschwimmt. Bei dieser bekannten Lösung befindet sich oberhalb des Kondensatzulaufs ein Unterdrucksystem. Die bekannte Lösung ist deshalb nicht geeignet für solche Systeme, bei denen am Kondensatzulauf ein Überdruck herrscht. Außerdem ist die Kondensatablaufeinrichtung konstruktiv aufwändig aufgebaut.

Der vorliegenden Erfindung liegt die Aufgabe zugrunde, ein Verfahren, eine Kondensatablaufeinrichtung, eine Systemkomponente für ein System sowie ein Energiesystem der eingangs genannten Art derart weiterzubilden, das anfallendes Kondensat auf konstruktiv einfache Weise gesammelt und abgeführt werden kann, wenn auf Seiten des Kondensatzulaufs ein Überdruck herrscht.

Diese Aufgabe wird erfindungsgemäß gelöst durch das Verfahren zum Ableiten von aus einem gasförmigen Medium abgeschiedenen Kondensat mit den Merkmalen des unabhängigen Patentanspruchs 1, welches den ersten Aspekt der Erfindung darstellt, durch die Kondensatablaufeinrichtung mit den Merkmalen des unabhängigen Patentanspruchs 7, welche den zweiten Aspekt der Erfindung darstellt, durch die Systemkomponente eines Systems mit den Merkmalen des unabhängigen Patentanspruchs 8, welche den dritten Aspekt der Erfindung darstellt, sowie durch das Energiesystem mit den Merkmalen des unabhängigen Patentanspruchs 15, welches den vierten Aspekt der Erfindung darstellt.

Weitere Merkmale und Details der Erfindung ergeben sich aus den Unteransprüchen, aus der Beschreibung sowie aus den Zeichnungen. Dabei gelten Merkmale und Details, die im Zusammenhang mit einem der Erfindungsaspekte offenbart sind, vollumfänglich auch im Zusammenhang mit allen anderen Erfindungsaspekten, und umgekehrt, so dass hinsichtlich der Offenbarung der einzelnen Erfindungsaspekte stets vollinhaltlich auch Bezug auf die jeweils anderen Erfindungsaspekte genommen wird. Insbesondere ergibt sich der Ablauf des erfindungsgemäßen Verfahrens auch aus der Funktionsbeschreibung sowie der Beschreibung des Zusammenwirkens der einzelnen Komponenten der erfindungsgemäßen Kondensatablaufeinrichtung, der erfindungsgemäßen Systemkomponente und des erfindungsgemäßen Energiesystems, so dass hinsichtlich des Ablaufs und der Durchführung des erfindungsgemäßen Verfahrens zur Vermeidung von Wiederholungen auch auf die Ausführungen zur erfindungsgemäßen Kondensatablaufeinrichtung, zur erfindungsgemäßen Systemkomponente und zum erfindungsgemäßen Energiesystems vollinhaltlich Bezug genommen und verwiesen wird.

Allen Erfindungsaspekten liegt das gemeinsame erfinderische Konzept zugrunde, dass eine in besonderer Weise ausgebildete Kondensatablaufeinrichtung zum Einsatz kommt, die konstruktiv einfach aufgebaut ist und nur aus wenigen Bauteilen besteht, und bei der die einzelnen Bauteile nicht willkürlich ausgebildet sind, sondern hinsichtlich ihrer Ausgestaltung in einer definierten Beziehung zueinanderstehen. und dass es für die Funktionsweise der Kondensatablaufeinrichtung erforderlich ist, dass in Bezug auf die einzelnen Bauteile vorgegebene Bedingungen erfüllt sind.

Ein Kernmerkmal der vorliegenden Erfindung besteht darin, dass diese für gasförmige Medien mit am Kondensatzulauf herrschendem Überdruckbereich bereitgestellt ist, insbesondere für strömende gasförmige Medien im Überdruckbereich, bei geringen Mengen anfallenden Kondensats. Die Kondensatablaufeinrichtung ist in kompakter Bauweise ausgebildet und ermöglicht einen sicheren Betrieb, insbesondere einen selbsttätigen Verschluss gegen Rückströmungen und Leckagevolumenströme, sowie ein selbsttätiges Öffnen bei plötzlichem oder kontinuierlichem Auftreten von Liquiden, beispielsweise Kondensat, Abtauwasser, oder dergleichen.

Gemäß dem ersten Aspekt der Erfindung wird ein Verfahren zum Ableiten von aus einem gasförmigen Medium abgeschiedenem Kondensat bereitgestellt, welches die Merkmale des unabhängigen Patentanspruchs 1 aufweist.

Grundvoraussetzung für das Verfahren ist es, dass in einem, insbesondere strömenden, gasförmigen Medium anfallendes Kondensat, beispielsweise aufgrund der Feuchte des gasförmigen Mediums, aus dem gasförmigen Medium abgeschieden wird. Ein Kondensat ist dabei jegliches Ergebnis, bei dem aufgrund von Kondensation gasförmiges Medium in den flüssigen Aggregatzustand übergeht. Unter dem Begriff "Kondensat" soll im Lichte der vorliegenden Erfindung jede Art von Flüssigkeit verstanden werden, die in einem gasförmigen Medium, beispielsweise in einem Gasstrom anfällt, beispielsweise auch Abtauflüssigkeit, und dergleichen. Das im gasförmigen Medium anfallende Kondensat wird in einer Kondensatablaufeinrichtung gesammelt und aus dieser abgeführt. Dazu ist die Kondensatablaufeinrichtung in besonderer Weise ausgebildet.

Bei einem ersten Bauteil der Kondensatablaufeinrichtung handelt es sich um den nach oben offenen Kondensatbehälter, der einen Aufnahmeraum aufweist, in dem das anfallende Kondensat gesammelt wird. Der Kondensatbehälter ist nach unten durch einen Behälterboden, seitlich durch eine Behälterseitenwandung und nach oben durch einen oberen Abschluss begrenzt, in dem sich die Behälteröffnung befindet. Die Seitenwandung erstreckt sich von dem unteren Bereich des Behälters, dem Behälterboden, zum oberen Bereich des Behälters, dem oberen Abschluss. Grundsätzlich ist die Ausgestaltung des Kondensatbehälters nicht auf bestimmte Ausführungsformen beschränkt. Bei dem Kondensatbehälter handelt es sich um ein nach oben offenes Gefäß. In einer Ausführungsform ist der Kondensatbehälter becherförmig, das heißt in Form eines Bechers, ausgebildet. Der becherförmige Kondensatbehälter kann beispielsweise zylinderförmig oder annähernd zylinderförmig ausgebildet sein. In einer Ausführung weist der Kondensatbehälter die Form eines umgekehrten Kegelstumpfs auf. Anders ausgedrückt, die Seitenwandung weitet sich, vom Behälterboden aus in Richtung des oberen Rands der Seitenwandung gesehen, in Richtung des oberen Rands der Seitenwandung auf. Auf diese Weise wird insbesondere eine besonders große Behälteröffnung bereitgestellt, die dazu dient, dass das Kondensat in den Kondensatbehälter hineinfließen kann. Vorzugsweise nimmt die Behälteröffnung die gesamte Querschnittsfläche des Kondensatbehälters an dessen oberem Abschluss, beispielsweise im oberem Rand der Seitenwandung, ein.

Der Kondensatbehälter weist einen Kondensatzulauf im oberen Abschluss des Kondensatbehälters auf, der durch die Behälteröffnung gebildet ist, und über den das aus dem gasförmigen Medium abgeschiedene Kondensat in den Aufnahmeraum des Kondensatbehälter eintritt. Ebenso weist der Kondensatbehälter einen Kondensatablauf im unteren Bereich des Kondensatbehälters, insbesondere im Behälterboden, auf, über den im Kondensatbehälter angesammeltes Kondensat abgeführt wird. Vorzugsweise weist der Kondensatablauf dazu eine Kondensatablauföffnung auf oder ist als eine solche ausgebildet, wobei sich die Kondensatablauföffnung bevorzugt mittig im Behälterboden befindet. Der Kondensatablauf beziehungsweise die Kondensatablauföffnung weist eine definierte Öffnungsfläche auf. Die Größe der Öffnungsfläche stellt insbesondere einen Parameter dar, der mit anderen Bauteilen beziehungsweise Parametern des Kondensatablaufeinrichtung in Beziehung steht, wie im weiteren Verlauf der Beschreibung noch verdeutlicht wird. Die vorliegende Erfindung ist nicht auf bestimmte Ausgestaltungen des Kondensatablaufs beziehungsweise der Kondensatablauföffnung beziehungsweise der Öffnungsfläche beschränkt. Beispielsweise kann dieser/diese rund, oval, mehreckig, beispielsweise dreieckig, viereckig, rechteckig, quadratisch, oder dergleichen ausgebildet sein. In einer bevorzugten Ausgestaltung ist eine runde Ausgestaltung realisiert. Vorzugsweise ist der Kondensatablauf beziehungsweise die Kondensatablauföffnung beziehungsweise die Öffnungsfläche von ihrer Größe und Kontur her abgestimmt auf den verwendeten Aufschwimmkörper, bei dem es sich um ein zweites Bauteil der Kondensatablaufeinrichtung handelt.

Der Aufschwimmkörper ist im Aufnahmeraum des Kondensatbehälters angeordnet. Der Aufschwimmkörper ist ein schwimmfähiger Körper, der aus einem schwimmfähigen Material besteht und/oder der aufgrund seines Auftriebs durch Verdrängung selbständig schwimmfähig ist. Aufschwimmkörper, die nicht aus einem von sich aus schwimmfähigen Material bestehen, sind in der Regel hohl und oftmals mit Luft oder einem leichten Feststoff gefüllt. Der Aufschwimmkörper ist derart in dem Aufnahmeraum des Kondensatbehälters angeordnet, dass er in der Lage ist, sich zwischen einer unteren Schließposition, in der der Aufschwimmkörper den Kondensatablauf verschließt und einer oberen Öffnungsposition, in der der Aufschwimmkörper den Kondensatablauf freigibt, zu bewegen. Vorzugsweise ist der Aufschwimmkörper derart in dem Kondensatbehälter angeordnet, dass er in der Lage ist, sich im Aufnahmeraum frei zu bewegen, das heißt ohne weitere Führungselemente.

Die Ausgestaltung des Aufschwimmkörpers steht in einer bestimmten Beziehung zur Ausgestaltung der Behälteröffnung. Erfindungsgemäß ist die maximale Ausdehnung der Behälteröffnung größer als die maximale Ausdehnung des Aufschwimmkörpers. Die Richtung der Ausdehnung des Aufschwimmkörpers ist dabei insbesondere horizontal oder parallel zur Ausrichtungsebene des Behälteröffnung. In einer Ausführungsform ist die maximale Querschnittsfläche des Aufschwimmkörpers kleiner als die Querschnittsfläche der Behälteröffnung. Handelt es sich bei dem Aufschwimmkörper um eine Kugel, ist der Durchmesser der Kugel kleiner als der Durchmesser der, beispielsweise ebenfalls runden, Behälteröffnung. Wichtig ist in jedem Fall, dass die Behälteröffnung, über die das Kondensat in den Aufnahmeraum des Kondensatbehälters eintritt, größer ist als die maximale horizontale Ausdehnung, das heißt die maximale Ausdehnung parallel zur Behälteröffnung, des Aufschwimmkörpers. Auf diese Weise kann das in den Kondensatbehälter eintretende Kondensat auch an dem Aufschwimmkörper seitlich vorbei laufen, wie weiter unten noch näher erläutert wird. Die Behälteröffnung wird bevorzugt so groß wie möglich gewählt, um einen maximal großen Eintrittsbereich für Kondensat in den Kondensatbehälter zu ermöglichen. In einer Ausführungsform erstreckt sich die Behälteröffnung über den gesamten Bereich des oberen Abschlusses des Kondensatbehälters, wobei in diesem Fall die Behälteröffnung ausschließlich durch die Behälterseitenwandung begrenzt ist.

Wenn sich genügend Kondensat im Aufnahmeraum befindet, schwimmt der Aufschwimmkörper auf und das Kondensat kann über den Kondensatablauf beziehungsweise die Kondensatablauföffnung beziehungsweise die Öffnungsfläche aus dem Kondensatbehälter ablaufen. Dadurch bewegt sich der Aufschwimmkörper aus seiner oberen Öffnungsposition zurück in seine untere Schließposition, in der er den Kondensatablauf wieder verschließt. Die vorliegende Erfindung ist nicht auf bestimmte Ausgestaltungen des Aufschwimmkörpers beschränkt. Beispielsweise kann dieser als Kugel, Quader, Würfel, eiförmig, oder dergleichen ausgebildet sein. In einer bevorzugten Ausgestaltung ist der Aufschwimmkörper in Form einer Kugel realisiert. Vorzugsweise ist der Aufschwimmkörper von seiner Größe und Kontur her abgestimmt auf die Ausgestaltung des Kondensatablaufs. Die Größe und/oder das Volumen und/oder die Form und/oder das Eigengewicht des Aufschwimmkörpers stellt/stellen insbesondere einen oder mehrere Parameter dar, der/die mit anderen Bauteilen beziehungsweise Parametern des Kondensatablaufeinrichtung in Beziehung steht/stehen, wie im weiteren Verlauf der Beschreibung noch verdeutlicht wird. Vorzugsweise liegt der Aufschwimmkörper in seiner unteren Schließposition mittig auf beziehungsweise über dem Kondensatablauf beziehungsweise der Kondensatablauföffnung beziehungsweise der Öffnungsfläche. Dies kann mittels einer geeigneten Auflageeinrichtung realisiert werden, die weiter unten im Detail beschrieben wird.

Vorzugsweise ist die Behälteröffnung des Kondensatzulaufs so groß dimensioniert, dass in den Aufnahmeraum des Kondensatbehälters eintretendes Kondensat seitlich, etwa links und rechts, vorzugsweise allseitig, an dem Aufschwimmkörper vorbeiläuft oder vorbeilaufen kann.

Erfindungsgemäß ist das Verfahren durch folgende Schritte gekennzeichnet.

Ein grundlegendes Merkmal des erfindungsgemäßen Verfahrens besteht darin, dass das gasförmige Medium vor dem Kondensatzulauf mit einem höheren Druckniveau anliegt als dasjenige Druckniveau, welches von außen an dem Kondensatablauf anliegt. Vorzugsweise herrscht im Bereich in oder vor der Behälteröffnung des Kondensatbehälters ein Überdruck, der größer ist als der von außen an dem Kondensatablauf des Kondensatbehälters anliegende Druck, bei dem es sich optional um den Umgebungsdruck kandelt. Der Überdruck ist insbesondere die Druckdifferenz zwischen dem Druck vor der Behälteröffnung, beispielsweise dem Druck in der Systemkomponente, abzüglich des Drucks, der von außen an dem Kondensatablauf anliegt, beispielsweise dem Umgebungsdruck.

Anfallendes Kondensat tritt über die Behälteröffnung von oben in den Aufnahmeraum des Kondensatbehälters ein, in dem sich der Aufschwimmkörper zunächst in der unteren Schließposition befindet und den Kondensatablauf verschließt. Das Kondensat tritt, vorzugsweise über die gesamte Fläche der Behälteröffnung, über die Behälteröffnung in den Kondensatbehälter ein und fließt von dort, insbesondere senkrecht, in Richtung des Behälterbodens. Dadurch fließt das Kondensat auch seitlich an dem Aufschwimmköper vorbei, vorzugsweise links und rechts, vorzugsweise allseitig, in Richtung Behälterboden. Handelt es sich bei dem Aufschwimmkörper um eine Kugel, trifft das Kondensat auch auf der Kugel auf und fließt aufgrund der gekrümmten Oberfläche über diese in Richtung Behälterboden. Aufgrund des eingangsseitig herrschenden Überdrucks wird der Aufschwimmkörper gegen den Kondensatablauf gedrückt. Auf dem Aufschwimmkörper von oben auftreffendes Kondensat, welches dann über die Oberfläche des Aufschwimmköpers nach unten in Richtung des Behälterboden läuft, kann diesen Effekt noch verstärken.

Wenn sich genügend Kondensat im Kondensatbehälter befindet, bewegt sich der Aufschwimmkörper irgendwann aus seiner unteren Schließposition in seine obere Öffnungsposition, und zwar erfindungsgemäß genau dann, wenn die Bedingung erfüllt ist, dass die Auftriebskraft, $F_{Auftrieb}$, des Aufschwimmkörpers größer ist als die auf den Aufschwimmkörper einwirkenden Gegenkräfte.

Bevorzugt bewegt sich der Aufschwimmkörper aus seiner unteren Schließposition in seine obere Öffnungsposition, wenn die Bedingung erfüllt ist, dass die Auftriebskraft, $F_{Auftrieb}$, des Aufschwimmkörpers größer ist als die Summe aus Verschlusskraft, $F_{Verschluss}$ in Bezug auf den Kondensatablauf und die Gewichtskraft, $F_G$, des Aufschwimmkörpers aufgrund dessen Eigengewichts. Das heißt, der Aufschwimmkörper bewegt sich aus seiner unteren Schließposition in seine obere Öffnungsposition, wenn folgende Gleichung erfüllt ist:

$$F_{Auftrieb} > F_{Verschluss} + F_G$$

Bevorzugt schwimmt der Aufschwimmkörper in jedem Fall auf, wenn das im Aufnahmeraum befindliche Kondensat von seiner Höhe her über dem Aufschwimmkörper in seiner unteren Schließposition im Aufnahmeraum steht.

Im Folgenden werden die einzelnen Bestandteile der vorstehenden Bedingung näher erläutert.

Vorzugsweise ist/wird die Auftriebskraft, $F_{Auftrieb}$, des Aufschwimmkörpers gebildet aus dem Produkt "Volumen des Aufschwimmkörpers", multipliziert mit "der Dichte des im Kondensatbehälter befindlichen Kondensats", in welches der Aufschwimmkörper eintaucht.

Vorzugsweise ist/wird die Verschlusskraft, $F_{Verschluss}$, in Bezug auf den Kondensatablauf gebildet aus dem Produkt "Überdruck vor der Behälteröffnung gegenüber dem von außen an dem Kondensatablauf des Kondensatbehälters anliegenden Druck", multipliziert mit "der Öffnungsfläche des Kondensatablaufs, über den das Kondensat aus dem Kondensatbehälter austritt". Bei dem Überdruck, $\Delta p$, handelt es sich vorzugsweise um die Differenz zwischen dem Druck des gasförmigen Mediums vor dem Kondensatzulauf und dem Druck, der von außen an dem Kondensatablauf anliegt. In einer bevorzugten Ausführungsform handelt es sich bei dem Druck, der von außen an dem Kondensatablauf anliegt, um den Umgebungsdruck. Die entsprechende Gleichung lautet wie folgt:

$$F_{Verschluss} = \Delta p \times A,$$

mit $\Delta p$ gleich Überdruck vor/an dem Kondensatzulauf und A gleich Fläche des Kondensatablaufs beziehungsweise der Kondensatablauföffnung beziehungsweise der Öffnungsfläche.

Vorzugsweise ist/wird die Gewichtskraft, $F_G$, des Aufschwimmkörpers beeinflusst durch die Größe und/oder die Materialeigenschaften und damit das Eigengewicht des Aufschwimmkörpers.

Durch die besondere Beziehung zwischen Behälteröffnung und Aufschwimmkörper umspült das in den Kondensatbehälter eintretende Kondensat den Aufschwimmkörper, vorzugsweise allseitig. Das wird insbesondere auch unter Verwendung einer geeigneten Auflageeinrichtung erreicht, auf der der Aufschwimmkörper in seiner unteren Schließposition aufliegt, und die im Zusammenhang mit der erfindungsgemäßen Kondensatablaufeinrichtung und der erfindungsgemäßen Systemkomponente weiter unten näher erläutert wird.

Schwimmt der Aufschwimmkörper in seine obere Öffnungsposition auf, wird der Kondensatablauf freigegeben und das im Kondensatbehälter befindliche Kondensat fließt über den Kondensatablauf aus dem Kondensatbehälter ab.

In einer Ausführung wird das Verfahren in einer Systemkomponente eines Systems durchgeführt, wobei die Erfindung grundsätzlich nicht auf bestimmte Systemkomponenten beschränkt ist. Vorzugsweise handelt es sich um eine Systemkomponente eines erfindungsgemäßen Energiesystems. Bei einer Systemkomponente kann es sich um jedwede Komponente handeln, in der sich ein gasförmiges Medium befindet, beispielsweise durch welche ein gasförmiges Medium strömt, wobei das gasförmige Medium Feuchtigkeit aufweist, die auskondensiert wird. Die Systemkomponente weist bevorzugt ein Gehäuse auf, innerhalb dessen die einzelnen Bestandteile der Systemkomponente angeordnet sind. Beispielsweise kann es sich bei der Systemkomponente um eine Komponente eines Lüftungssystems handeln, das wiederum Bestandteil eines Energiesystems sein kann. All dies wird im Zusammenhang mit den weiteren Erfindungsaspekten weiter unten näher erläutert.

Vorzugsweise strömt das gasförmige Medium durch eine Systemkomponente eines Systems, insbesondere eines Energiesystems, hindurch, wobei in dem Gasstrom anfallendes Kondensat in der Kondensatablaufeinrichtung, welche mit der Systemkomponente zusammenwirkt, gesammelt und aus dieser abgeführt wird. Die Strömung des gasförmigen Mediums in der Systemkomponente wird bevorzugt mittels eines Gebläses erzeugt oder unterstützt. Über ein solches Gebläse kann auch der am/im Kondensatzulauf herrschende Überdruck erzeugt, zumindest aber beeinflusst werden. Alternativ oder zusätzlich kann das gasförmige Medium einen in der Systemkomponente befindlichen Wärmeübertrager durchströmen. An oder in dem Wärmeübertrager kann es beispielsweise zur Entstehung von Kondensat führen, welches mittels der Kondensatablaufeinrichtung, welche dann mit dem Wärmeübertrager zusammenwirkt, gesammelt und anschließend abgeführt wird.

In einer Ausführung wird das Kondensat über eine dem Kondensatablauf zugeordnete Abfuhreinrichtung abgeführt. Bei der Abfuhreinrichtung kann es sich beispielsweise um einen Abfuhrstutzen oder eine Abfuhrleitung oder einen Abfuhrflansch handeln. Die Abfuhreinrichtung schließt sich außen an den Behälterboden des Kondensatbehälters an den Kondensatablauf beziehungsweise die Kondensatablauföffnung beziehungsweise die Öffnungsfläche an. Wenn das Verfahren in einer Systemkomponente ausgeführt wird, welche von einem Gehäuse umgeben ist, kann sich die Kondensatablaufeinrichtung beispielsweise innerhalb des Gehäuses befinden, und nur die Abfuhreinrichtung ist aus dem Gehäuse herausgeführt. Dadurch kann die Kondensatablaufeinrichtung bei Bedarf leicht ausgetauscht werden. Das am Kondensatablauf anstehende Druckniveau ergibt sich in diesem Fall durch den in der Abfuhreinrichtung herrschenden Druck, der auch von außen an dem Kondensatablauf anliegt, denn der Kondensatablauf geht in die Abfuhreinrichtung über. In anderer Ausgestaltung kann sich die Kondensatablaufeinrichtung in der Gehäusewand befinden oder Teil der Gehäusewand sein. In diesem Fall befindet sich der Kondensatzulauf beziehungsweise die Behälteröffnung beispielsweise innerhalb des Gehäuses, während sich der Kondensatablauf außerhalb des Gehäuses befindet. Die Erfindung ist nicht auf bestimmte Ausführungsformen beschränkt. Wichtig ist bei Verwendung einer entsprechenden Systemkomponente mit Gehäuse lediglich, dass der Kondensatzulauf beziehungsweise die Behälteröffnung mit dem Gehäuseinnern zusammenwirkt, während der Kondensatablauf mit der Umgebung außerhalb des Gehäuses zusammenwirkt, damit der weiter oben beschriebene Überdrück vor oder am Kondensatzulauf zustande kommt.

Das Verfahren kann für verschiedene Anwendungszwecke oder unter verschiedenen Bedingungen ablaufen. Beispielsweise kann der Druck geändert werden, oder der Kondensatbehälter kann mit anderen oder variablen Kondensatabläufen beziehungsweise Kondensatablauföffnungen beziehungsweise Öffnungsflächen verwendet werden, oder es können unterschiedlich ausgestaltete Kondensatablaufeinrichtungen zum Einsatz kommen. Bevorzugt lässt sich der Aufschwimmkörper austauschen.

In einer Ausführungsform des Verfahrens wird der Zeitpunkt, ob und wann sich der Aufschwimmkörper aufgrund des im Aufnahmeraum des Kondensatbehälters befindlichen Kondensats aus seiner unteren Schließposition in seine obere Öffnungsposition bewegt und den Kondensatablauf freigibt, variabel beeinflusst, indem das Druckniveau in dem gasförmigen Medium vor dem Kondensatzulauf beeinflusst wird. Das kann beispielsweise durch Steuerung eines entsprechenden Gebläses oder Lüfters oder Ventilators realisiert werden. Auf diese Weise kann der Kondensatablass vorzugsweise über eine Absenkung des Überdrucks an der Kondensatzulaufseite angesteuert und/oder unterstützt werden. Dieser Ausführungsform liegt die Erkenntnis zugrunde, dass das Aufschwimmen des Aufschwimmkörpers und damit das Öffnen des Kondensatablaufs beziehungsweise der Kondensatablauföffnung abhängig vom Überdruck ist. Damit kann gezielt das Öffnen und Schließen über den Druck geregelt werden, beispielsweise mittels des Gebläses oder des Lüfters oder des Ventilators. Sollte aufgrund von anderen Wasseranfällen, Havarien oder dergleichen ein Ablaufen von Kondensat nicht erwünscht sein, könnte das Gebläse beziehungsweise der Lüfter oder der Ventilator gezielt auf eine Drehzahl fahren, bei der der erzeuge Druck über einer vorher ausgewählten Druckgrenze zum Aufschwimmen liegt. Alternativ könnte diese Grenze auch so gewählt werden, dass im Normalbetrieb mit einem festen Verschluss zu rechnen ist. Für eine garantierte Entwässerung kann der Überdruck, beispielsweise durch Abstellen des Gebläses beziehungsweise Lüfters oder Ventilators komplett genullt werden. Dadurch wird ein Aufschwimmen auch bei geringen Mengen Kondensat garantiert. Beispielsweise kann realisiert werden, dass der Kondensatablass bei Volllast beispielsweise erst bei einer sehr hohen Flüssigkeitssäule im Kondensatbehälter erfolgt.

In einer weiteren Ausführungsform des Verfahrens wird der Zeitpunkt, wann sich der Aufschwimmkörper aufgrund des im Aufnahmeraum des Kondensatbehälters befindlichen Kondensats aus seiner unteren Schließposition in seine obere Öffnungsposition bewegt und den Kondensatablauf freigibt, variabel beeinflusst, indem ein Aufschwimmkörper bezüglich seines Volumens und/oder seines Eigengewichts ausgewählt wird in Abhängigkeit von der Öffnungsfläche des Kondensatablaufs und/oder von der Dichte des Kondensats und/oder von dem an der Behälteröffnung herrschenden Überdruck und/oder von dem außen am Kondensatablauf anliegenden Druck.

Bevorzugt wird der zur Durchführung des Verfahrens verwendete Aufschwimmkörper an vorgegebene Druckwerte angepasst, und/oder die Druckwerte an einen vorgegebenen Aufschwimmkörper angepasst.

Bevorzugt wird mittels einer Einrichtung zur Durchflusserkennung die Öffnung, insbesondere die Frequenz des Öffnens, der Kondensatablauföffnung erfasst und daraus ein Leckagevolumenstrom an Flüssigkeit, beispielsweise an Wasser, oberhalb der Kondensatablaufeinrichtung abgeschätzt. Für die Planung von Serviceeinsätzen beispielsweise ist es von Vorteil, wenn man eine Leckage, beispielsweise eine Wasser-Leckage, oberhalb der Kondensatablaufeinrichtung erkennen kann, etwa wenn sich Flüssigkeit in einer entsprechenden Wanne oder einer anderen Auffangeinrichtung ansammelt. Die Verwendung von Schwimmschaltern ist dabei oft ungünstig, da hierfür eine gewisse Flüssigkeitshöhe benötigt wird. Stehende Flüssigkeiten sind in der Regel jedoch zu vermeiden, da dadurch der Korrosionsschutz negativ beeinflusst wird. Zudem kann es zu Hygieneproblemen kommen. Bei einem konstanten Volumenstrom durch die Kondensatablaufeinrichtung ergibt sich bevorzugt ein, insbesondere rhythmisches, Öffnen und Schließen ergeben. Ab einem bestimmten Durchfluss kann die Kondensatablauföffnung sogar permanent geöffnet bleiben. Durch die messbare Frequenz des Öffnens, beziehungsweise die permanente Öffnung, kann der Leckagevolumenstrom der Flüssigkeit, der sich durch die Kondensatablaufeinrichtung bewegt, geschätzt werden. Darauf basierend kann dann beispielsweise die Priorität eines Serviceeinsatzes festgelegt werden. Eine entsprechende Einrichtung zur Durchflusserkennung ist im Zusammenhang mit dem erfindungsgemäßen Kondensatablaufeinrichtung weiter unten im Detail beschrieben, so dass an dieser Stelle auch auf die entsprechenden Ausführungen weiter untern Bezug genommen und verwiesen wird.

Zur Verdeutlichung werden hierzu nachfolgend einige Beispiele beschrieben. Für die Verbesserung der Wartung und von Serviceeinsätzen ist es wichtig, ob und unter Umständen auch wie viel Flüssigkeit im Überdruckbereich, das heißt oberhalb oder vor der Kondensatablaufeinrichtung, angefallen ist. Ein einfaches kurzzeitiges oder einmaliges Aufschwimmen bedeutet beispielsweise, dass eine kleine Wassermenge, entsprechend der Behältergröße und des vorhandenen Überdrucks, abgeflossen is. Das kann beispielsweise bedeuten, dass hier lediglich ein kleiner Kondensatschwall in den Kondensatbehälter eingeflossen ist. Ein rhythmisches Aufschwimmen kann beispielsweise bedeuten, dass hier ein kontinuierlicher Wasseranfall gesammelt wird. Das kann auf eine kontinuierliche Leckage hindeuten, die einen Service und eventuell weitere Sofortmaßnahmen notwendig macht.

Abhängig vom anliegenden Überdruck, der Behältergröße und der Frequenz kann auf diese Weise sogar der Volumenstrom bestimmt werden.

Ein kontinuierliches Aufschwimmen bedeutet beispielsweise, dass hier ein sehr großer dauerhafter Wasseranfall vorliegt. Liegt der Volumenstrom über einem Grenzwert, insbesondere abhängig von Behältergröße, Überdruck und Kondensatablauföffnung, kann dies beispielsweise zum Einleiten von Notfallmaßnahmen führen.

Gemäß dem zweiten Aspekt der Erfindung wird eine Kondensatablaufeinrichtung bereitgestellt, die zum Ableiten von aus einem gasförmigen Medium abgeschiedenem Kondensat bereitgestellt ist, und die die Merkmale des unabhängigen Patentanspruchs 7 aufweist. Die Kondensatablaufeinrichtung weist einen nach oben offenen Kondensatbehälter auf, der wiederum einen Aufnahmeraum aufweist, der nach unten durch einen Behälterboden, seitlich durch eine Behälterseitenwandung und nach oben durch einem oberen Abschluss mit einer Behälteröffnung begrenzt ist. Ferner verfügt der Kondensatbehälter über einen Kondensatzulauf im oberen Bereich des Kondensatbehälters, der durch die Behälteröffnung gebildet ist, sowie über einen Kondensatablauf im unteren Bereich des Kondensatbehälters, insbesondere im Behälterboden, über den im Kondensatbehälter angesammeltes Kondensat abgeführt wird. Weiterhin vorgesehen ist ein Aufschwimmkörper im Aufnahmeraum des Kondensatbehälters, wobei der Aufschwimmkörper derart in dem Aufnahmeraum des Kondensatbehälters angeordnet ist, dass er in der Lage ist, sich zwischen einer unteren Schließposition, in der der Aufschwimmkörper den Kondensatablauf verschließt und einer oberen Öffnungsposition, in der der Aufschwimmkörper den Kondensatablauf freigibt, zu bewegen. Ein solcher Kondensatbehälter mit Aufschwimmkörper ist auch im Zusammenhang mit dem erfindungsgemäßen Verfahren beschrieben, so dass an dieser Stelle zur Vermeidung von Wiederholungen auch auf die entsprechenden Ausführungen im Rahmen des erfindungsgemäßen Verfahrens gemäß dem ersten Erfindungsaspekt vollinhaltlich Bezug genommen und verwiesen wird.

Erfindungsgemäß ist die maximale Ausdehnung der Behälteröffnung größer als die maximale Ausdehnung des Aufschwimmkörpers. Diesbezüglich wird auf die Ausführungen zum ersten Erfindungsaspekt weiter oben vollinhaltlich Bezug genommen und verwiesen.

Bevorzugt ist die Kondensatablaufeinrichtung für einen Betrieb eingerichtet beziehungsweise bereitgestellt, bei dem an dem Kondensatzulauf beziehungsweise der Behälteröffnung ein höheres Druckniveau anliegt als das Druckniveau, das außen an dem Kondensatablauf anliegt, so wie dies auch im Zusammenhang mit dem erfindungsgemäßen Verfahren beschrieben ist, worauf an dieser Stelle verwiesen wird.

Der Aufschwimmkörper und/oder der Kondensatbehälter ist/sind derart ausgebildet, dass das Volumen und/oder das Eigengewicht des Aufschwimmkörpers in Abhängigkeit von der Öffnungsfläche des Kondensatablaufs und/oder von der Dichte des Kondensats und/oder von der Öffnungsfläche des Kondensatablaufs, und/oder von dem am Kondensatzulauf anliegenden Druckniveau und/oder von dem am Kondensatablauf außen anliegenden Druckniveau ausgewählt ist/sind. Auch diesbezüglich wird auf die Ausführungen zum erfindungsgemäßen Verfahren weiter oben vollinhaltlich Bezug genommen und verwiesen.

Gemäß dem dritten Aspekt der Erfindung wird eine Systemkomponente eines Systems, insbesondere eines Energiesystems, mit den Merkmalen des unabhängigen Patentanspruchs 8 bereitgestellt, die von einem Gasstrom durchströmt wird oder durchströmbar ist, oder in der sich ein gasförmiges Medium befindet, mit einer Kondensatablaufeinrichtung, welche derart bereitgestellt ist, dass sie in der Lage ist, in der Systemkomponente im Gasstrom oder im gasförmigen Medium anfallendes Kondensat zu sammeln und abzuführen. Vorzugsweise ist die Kondensatablaufeinrichtung an oder in der Systemkomponente angeordnet oder ausgebildet. Erfindungsgemäß ist die Kondensatablaufeinrichtung der Systemkomponente gemäß dem zweiten Aspekt der Erfindung ausgebildet, so dass an dieser Stelle auch auf die entsprechenden Ausführungen zum ersten und zweiten Erfindungsaspekt weiter oben vollinhaltlich Bezug genommen und verwiesen wird. Die Kondensatablaufeinrichtung ist insbesondere derart an/in der Systemkomponente angeordnet beziehungsweise bereitgestellt, dass an dem Kondensatzulauf beziehungsweise der Behälteröffnung ein höheres Druckniveau anliegt als das Druckniveau, das außen an dem Kondensatablauf anliegt, so wie dies auch im Zusammenhang mit dem erfindungsgemäßen Verfahren beschrieben ist, worauf an dieser Stelle verwiesen wird.

Eine Systemkomponente eines Systems kann grundsätzlich beliebig ausgestaltet sein und eine beliebige Funktion haben. Voraussetzung ist lediglich, dass sich in der Systemkomponente ein gasförmiges Medium befindet, oder dass die Systemkomponente von einem gasförmigen Medium durchströmt wird. In dem gasförmigen Medium fällt Kondensat an. Das gasförmige Medium ist beispielsweise feucht, wobei die Feuchtigkeit auskondensiert und als Kondensat abgeführt wird. In einer Ausführungsform handelt es sich bei der Systemkomponente um eine Komponente eines Lüftungssystems, das wiederum Bestandteil eines Energiesystems, beispielsweise eines erfindungsgemäßen Energiesystems, etwa eines Gebäudeenergiesystems, ist. Ein nicht ausschließliches Beispiel hierzu wird weiter unten in größerem Detail beschrieben.

Vorzugsweise weisen die Kondensatablaufeinrichtung oder die Systemkomponente Mittel zur Durchführung des Verfahrens gemäß dem ersten Aspekt der Erfindung auf, so dass diesbezüglich auch auf die Ausführungen zum ersten Erfindungsaspekt, sowie zur allgemeinen Beschreibung der Erfindung vollinhaltlich Bezug genommen und verwiesen wird.

Vorzugsweise ist/sind der Aufschwimmkörper und/oder der Kondensatbehälter derart ausgebildet, dass sich der Aufschwimmkörper aus seiner unteren Schließposition in seine obere Öffnungsposition bewegt, wenn die Auftriebskraft, $F_{Auftrieb}$, des Aufschwimmkörpers größer ist als die Summe aus Verschlusskraft, $F_{Verschluss}$, in Bezug auf den Kondensatablauf und die Gewichtskraft, $F_G$, des Aufschwimmkörpers aufgrund dessen Eigengewichts. Diesbezüglich wird auf die korrespondierenden Ausführungen zum erfindungsgemäßen Verfahren Bezug genommen und verwiesen.

Bevorzugt ist der Aufschwimmkörper freibeweglich und ohne weitere Führungselemente im Aufnahmeraum des Kondensatbehälters angeordnet.

Damit der Aufschwimmkörper in seiner unteren Schließposition den Kondensatablauf beziehungsweise die Kondensatablauföffnung beziehungsweise die Öffnungsfläche ordnungsgemäß verschließt, ist es erforderlich, dass der Aufschwimmkörper in dem Kondensatbehälter stets korrekt platziert wird. Dazu ist in der Peripherie des Kondensatablaufs innerhalb des Kondensatbehälters gemäß einer Ausführungsform eine Auflageeinrichtung für den Aufschwimmkörper angeordnet oder ausgebildet. Der Aufschwimmkörper liegt in der unteren Schließposition auf der Auflageeinrichtung auf und wird auf dieser bevorzugt gleichzeitig auch abgestützt. Die Auflageeinrichtung ist insbesondere lösbar angeordnet, damit sie bei Bedarf ausgetauscht werden kann, etwa wenn unterschiedlich ausgestaltete Aufschwimmkörper zum Einsatz kommen, oder aber wenn mittels der Auflageeinrichtung die Größe und/oder Form des Kondensatablaufs beziehungsweise der Kondensatablauföffnung beziehungsweise der Öffnungsfläche verändert werden soll. Vorzugsweise ist die Auflageeinrichtung derart ausgebildet, dass der Aufschwimmkörper; wenn er in seiner unteren Schließposition auf der Auflageeinrichtung aufliegt, von mehreren Seiten, vorzugsweise von allen Seiten, beispielsweise seitlich, und gemäß einer Ausführungsform auch von seitlich unten, von Kondensat umströmt wird, welches über die Behälteröffnung von oben in den Aufnahmeraum des Kondensatbehälters einströmt. Die Auflageeinrichtung ist weiterhin derart ausgebildet, dass sie in der Lage ist, den Aufschwimmkörper korrekt gegenüber dem Kondensatablauf zu positionieren, wenn sich der Aufschwimmkörper aus seiner oberen Öffnungsstellung zurück in seine untere Schließposition bewegt. Vorzugsweise weist die Auflageeinrichtung mehrere Auflageelemente auf, beispielsweise drei, vier, fünf oder sechs Auflageelemente, die, beabstandet zueinander, in der Peripherie des Kondensatablaufs beziehungsweise der Kondensatablauföffnung beziehungsweise der Öffnungsfläche um diese(n) herum angeordnet sind. Die Erfindung ist nicht auf eine bestimmte Anzahl derartiger Auflageelemente beschränkt. Vorzugsweise sind die Auflageelemente als Stützelemente, Streben, Finnen, oder dergleichen ausgebildet. Die Auflageelemente erstrecken sich vom Behälterboden, an dem sie angeordnet oder ausgebildet sind, innerhalb des Aufnahmeraums in Richtung der Behälteröffnung. Der obere Rand der Auflageelemente bildet dann eine Auflagefläche für den Aufschwimmkörper. Die Auflageelemente weisen bevorzugt einen schräg verlaufenden oberen Rand beziehungsweise ein schräg verlaufendes oberes Ende auf, wobei der schräge Verlauf bevorzugt nach unten in Richtung des Kondensatablaufs, beziehungsweise der Kondensatablauföffnung beziehungsweise der Öffnungsfläche gerichtet ist. Damit kann der Aufschwimmkörper in die Auflageeinrichtung "einfädeln", wenn er aus der oberen Öffnungsposition in die untere Schließposition zurückkehrt.

In einer Ausführung ist die Auflageeinrichtung als umlaufendes Dichtungselement ausgebildet, welches bevorzugt eine Anzahl von radial verlaufenden Durchgängen oder Durchbrüchen aufweist. Vorzugsweise ist die Auflageeinrichtung als eine Art Plateau ausgebildet, auf dem der Aufschwimmkörper in der unteren Schließposition ruht, und das, über entsprechende Öffnungen, Durchbrüche oder dergleichen, aber gegebenenfalls auch mittels diverser Mikrokanäle, ermöglicht, dass der in der unteren Schließposition befindliche Aufschwimmkörper von Kondensat umspült und/oder unterströmt wird. Die Auflageeinrichtung ist optional derart bereitgestellt, dass sie ein, vorzugsweise allseitiges, Umspülen des Aufschwimmkörpers mit Kondensat ermöglicht.

In einer Ausführung weist die Auflageeinrichtung und/oder der Peripheriebereich des Kondensatablaufs, insbesondere der Kondensatablauföffnung, innerhalb des Kondensatbehälters eine Dichtfläche gegen den Aufschwimmkörper auf. Dadurch wird eine ausreichende Dichtheit gewährleistet, beispielsweise bezüglich eines Luftverlusts durch die Kondensatablaufeinrichtung im geschlossenen Zustand. Hier kann beispielsweise auch ein wie vorstehend beschriebenes Dichtungselement zum Einsatz kommen. Vorzugsweise ist die Dichtfläche im Vergleich zum Aufschwimmkörpers, insbesondere zu dessen Oberfläche, unterschiedlich ausgestaltet. Beispielsweise können beide Bauteile im Vergleich zueinander eine unterschiedliche Härte beziehungsweise Flexibilität oder Weichheit aufweisen. Beispielsweise kann der Aufschwimmkörper weich sein, während die Dichtfläche hart ist. Oder aber die Dichtfläche ist weich und der Aufschwimmkörper entsprechend hart. Zusätzlich kann auch das im Kondensatbehälter befindliche Kondensat als Dichtmittel dienen, das beispielsweise die Dichtstellen benetzt und per Oberflächenspannung dichtet. Mit Hilfe einer hydrophilen Dichtfläche beispielsweise kann die Dichtheit erhöht werden, beispielsweise wenn es besonders wichtig ist, dass auch kleinere Gasleckagen zu vermeiden sind. Mit Hilfe von kleinen Kanälen oder einer hydrophoben Dichtfläche kann gezielt eine minimale Undichtheit gelassen werden, beispielsweise um zu verhindern, dass sich in hygienisch bedenklichen Bereichen ein Wasserrückstau bildet.

In einer Ausführung weist die Kondensatablaufeinrichtung eine Einrichtung zur Durchflusserkennung von Kondensat auf. Diese Einrichtung ist bereits allgemein im Zusammenhang mit dem erfindungsgemäßen Verfahren beschrieben, so dass an dieser Stelle auch auf die entsprechenden Ausführungen weiter oben vollinhaltlich Bezug genommen und verwiesen wird. Die Einrichtung zur Durchflusserkennung kann beispielsweise in Form eines Mikrotasters bereitgestellt sein, der dem Aufschwimmkörper zugeordnet ist, und der durch den Aufschwimmkörper betätigt wird. In anderer Ausgestaltung kann die Einrichtung beispielsweise auch als Leitwertsensor oder als Einrichtung zur Detektion über einen elektrischen Kontakt ausgebildet sein. Die Erfindung ist diesbezüglich nicht auf bestimmte Ausführungsbeispiele beschränkt.

In einer Ausführung ist dem Kondensatablauf eine Abfuhreinrichtung zugeordnet, über die das aus dem Aufnahmeraum des Kondensatbehälters über den Kondensatablauf austretende Kondensat abgeführt wird. Beispielsweise kann es sich bei der Abfuhreinrichtung um einen Abfuhrstutzen oder eine Abfuhrleitung oder einen Abfuhrflansch handeln.

Unterhalb des Kondensatzulaufs, das heißt unterhalb der Behälteröffnung, ist in dem Aufnahmeraum des Kondensatbehälters gemäß einer Ausführung ein Absperrelement, insbesondere ein Gitterelement, angeordnet oder ausgebildet. Dieses ist bereitgestellt, damit der Aufschwimmkörper, beispielsweise bei großen Kondensatmengen, den Aufnahmeraum des Kondensatbehälters nicht ungewollt verlassen kann.

Zum Zwecke einer individuellen wahlweisen Ausgestaltung können zwei oder mehr unterschiedliche Aufschwimmkörper und/oder zwei oder mehr unterschiedliche Auflageeinrichtungen bereitgestellt sein.

Diese bilden dann zusammen mit dem Kondensatbehälter eine Art Baukasten, wobei je nach Bedarf und Anwendungsfall unterschiedliche Aufschwimmkörper und/oder Auflageeinrichtungen in dem Kondensatbehälter angeordnet werden. Verschiedene Aufschwimmkörper, beispielsweise verschieden große und/oder schwere Aufschwimmkörper, und/oder unterschiedliche Auflageeinrichtungen, können beispielsweise für unterschiedliche Druckbereiche bereitgestellt werden.

Gemäß dem vierten Aspekt der Erfindung wird ein Energiesystem, insbesondere ein Gebäudeenergiesystem, mit den Merkmalen des unabhängigen Patentanspruchs 15 bereitgestellt, welches eine Kondensatablaufeinrichtung gemäß dem zweiten Aspekt der Erfindung oder eine Systemkomponente gemäß dem dritten Aspekt der Erfindung aufweist, oder welches Mittel zur Durchführung des Verfahrens gemäß dem ersten Aspekt der Erfindung aufweist. Bezüglich der Ausgestaltung des Energiesystems wird deshalb auch auf die Ausführungen zum ersten, zweiten und dritten Aspekt der Erfindung sowie zur allgemeinen Beschreibung der Erfindung vollinhaltlich Bezug genommen und verwiesen.

Das Energiesystem weist beispielsweise eine Elektrolyseeinrichtung auf, mittels derer Wasserstoff erzeugt wird. Weiterhin kann das Energiesystem eine Brennstoffzelleneinrichtung aufweisen, in der der erzeugte Wasserstoff verbraucht wird, wobei neben elektrischer Energie auch Wärme entstehen kann, die anderen Prozessen nutzbar gemacht werden kann. Ebenso kann in dem Energiesystem über die Kondensatablaufeinrichtung gewonnenes Kondensat weiteren Prozessen nutzbar gemacht werden. Zudem kann das Energiesystem weitere Komponenten umfassen, beispielsweise ein Lüftungssystem, eine Wärmepumpeneinrichtung, und dergleichen.

Bei dem Energiesystem handelt es sich insbesondere um ein aus mehreren Komponenten bestehendes Ganzes, wobei die Komponenten miteinander zu einer zweckgebundenen Einheit verbunden sind. Im vorliegenden Fall handelt es sich bei dem Energiesystem um ein System zum Erzeugen beziehungsweise Bereitstellen von Energie, vorzugsweise von elektrischer Energie. Grundsätzlich ist die Erfindung nicht auf bestimmte Arten von Energiesystemen beschränkt.

In einer bevorzugten Ausführungsform handelt es sich bei dem Energiesystem um ein Gebäudeenergiesystem. Gebäudeenergiesysteme sind grundsätzlich aus dem Stand der Technik bekannt und dienen der Versorgung von Gebäuden, beispielsweise von Niedrigenergiehäusern, Passivhäusern oder Nullenergiehäusern, mit Energie in Form von Wärme und insbesondere in Form von Strom, beispielsweise Strom aus regenerativen Energiequellen wie beispielsweise Photovoltaik (PV)-Generatoren oder Kleinwindkraftanlagen. Ein solches Gebäudeenergiesystem schafft die Grundlage dafür, dass der Energiebedarf eines Gebäudes, insbesondere eines Niedrigenergiehauses, eines Passivhauses oder eines Nullenergiehauses, sowohl hinsichtlich des Strom- als auch des Wärmebedarfs vollständig aus erneuerbaren Energiequellen gedeckt werden kann und somit vollständige $CO_2$-Freiheit im Betrieb besteht. Wenigstens aber kann der Strombedarf eines Gebäudes im Sinne einer anzustrebenden Eigenverbrauchserhöhung nahezu vollständig aus erneuerbaren Energiequellen, insbesondere mittels eines PV-Generators und/oder einer Kleinwindenergieanlage, gedeckt werden.

Ein solches Gebäudeenergiesystem ist beispielsweise in den Patentanmeldungen WO 2017/089468 A1 und WO 2017/089469 A1 der Anmelderin offenbart und beschrieben, deren Offenbarungsgehalt in die Beschreibung der vorliegenden Patentanmeldung mit einbezogen wird.

Gemäß einer bevorzugten Ausführungsform weist ein Gebäudeenergiesystem der genannten Art die folgenden Grundmerkmale auf:

- einen DC-Einspeisepunkt, bevorzugt ausgebildet für eine Nenn-Spannung von 48 Volt oder für eine Nennspannung zwischen 200 und 1000 Volt und/oder einem AC-Einspeisepunkt, bevorzugt ausgebildet für eine Spannung von 230 Volt oder 110 Volt oder einer 3-phasigen Einspeisung bei pro Phase 230 Volt oder 110 Volt, wobei der DC-Einspeisepunkt und/oder der AC-Einspeisepunkt im Betrieb zumindest zeitweise mit einem elektrischen Verbraucher, der eine Verbrauchs-Leistung aufweist, verbunden ist,

- einen elektrisch mit dem DC-Einspeisepunkt wenigstens zeitweise verbundenen PV-Generator zum Erzeugen einer elektrischen PV-Leistung,

- eine elektrisch mit dem DC-Einspeisepunkt oder mit dem AC-Einspeisepunkt wenigstens zeitweise verbundene Brennstoffzelleneinheit zum Erzeugen einer elektrischen Brennstoffzellen-Leistung,

- eine elektrisch mit dem DC-Einspeisepunkt verbundene Elektrolyseeinheit zum Erzeugen von durch die Brennstoffzelleneinheit zu verbrauchendem Wasserstoff, wobei die Elektrolyseeinheit im Betrieb mit einer elektrischen Elektrolyse-Eingangsleistung gespeist wird,

- einen Wasserstofftank, insbesondere als Langzeitenergiespeicher, der mit der Brennstoffzelleneinheit und der Elektrolyseeinheit wenigstens zeitweise fluidverbunden ist und zum Speichern von mittels der Elektrolyseeinheit zu erzeugendem und durch die Brennstoffzelleneinheit zu verbrauchendem Wasserstoff ausgebildet ist,

- eine Speicher-Batterieeinheit, insbesondere als Kurzzeitenergiespeicher, die elektrisch mit dem DC-Einspeisepunkt verbunden oder zu verbinden ist, so dass eine elektrische PV-Leistung und eine elektrische Brennstoffzellen-Leistung in die Speicher-Batterieeinheit eingespeichert werden kann und eine elektrische Elektrolyse-Eingangsleistung und eine Verbrauchs-Leistung aus der Speicher-Batterieeinheit entnommen werden können; und

- ein Steuermodul zum Steuern der Hausenergieanlage.

Das Energiesystem kann als reines Innensystem aufgestellt werden und saugt die Luft im Aufstellraum an und gibt diese auch wieder in selbigen ab.

Mit dem erfindungsgemäßen Energiesystem wurde die Möglichkeit geschaffen, die Abwärmen und eventuellen Wasseranteile entweder in die Abluft, die Zuluft, die Außenluft oder ungenutzt der Fortluft beizumischen. In der Abluftvariante besteht demzufolge die Möglichkeit auf einen separaten Abluftventilator zu verzichten. Diese Form des Energiesystems ist eine sogenannte Direktwärmenutzung, also beim Auftreten der Abwärme wird diese bedarfsgerecht direkt genutzt oder in die Fortluft geleitet.

Eine Erweiterung des Energiesystems stellt hierbei die Verwendung einer Wärmepumpe, insbesondere einer Luft-Wärmepumpe, dar. Hierbei handelt es sich insbesondere um eine Kältemaschine, mit umschaltbaren Wärmeübertragern bei Dualbetrieb von Energiequellen aus gezielter Temperierung der Außenluft des Lüftungsgerätes oder der Verwendung von Außenluft und/oder Fortluft des Lüftungsgerätes. Dadurch besteht die zeitliche Entkopplung aus regenerativer Energiebereitstellung aus den Abwärmen der wirkungsgradbehafteten Elektrolyse oder der Brennstoffzelle, um diese Energiequellen zur Anhebung der Arbeitszahl der Kältemaschine sinnvoll zu nutzen und in einem Warmwasserspeicher und/oder Heizungspufferspeicher zwischenzuspeichern. Dies wird als thermische, regenerative Kurzzeitspeicherung bezeichnet.

Bei einer Aussenluftverschaltung ist die Vorerwärmung der Außenluft zur Reduzierung der Auftaufunktion des Lüftungsgerätes ein Vorteil, bei Überwärme durch die Wasserstoffmodule können so auch bivalent die Abwärmen aus der gemischten Außenluft und parallel aus der gemischten Fortluft des Lüftungsgerätes in Warmwasserspeichern/Heizungspufferspeichern bedarfsgerecht gespeichert werden.

In verschiedenen Gasströmen innerhalb des Energiesystems bestehende Feuchtigkeit kann als Kondensat abgeschieden und mittels der Kondensatablaufeinrichtung abgeführt werden.

Die Erfindung wird nun anhand verschiedener Ausführungsbeispiele unter Bezugnahme auf die beiliegenden Zeichnungen näher erläutert. Es zeigen

| | |
|---|---|
| Figur 1 | in schematischer Ansicht ein Energiesystem, in dem die Erfindung implementiert werden kann; |
| Figur 2 | in schematischer Ansicht ein Lüftungssystem, um die das Energiesystem erweitert werden kann; |
| Figuren 3 bis 5 | verschiedene Ansichten, die den Aufbau der erfindungsgemäßen Kondensatablaufeinrichtung zeigen; und |
| Figuren 6 und 7 | jeweils eine schematische Ansicht, |

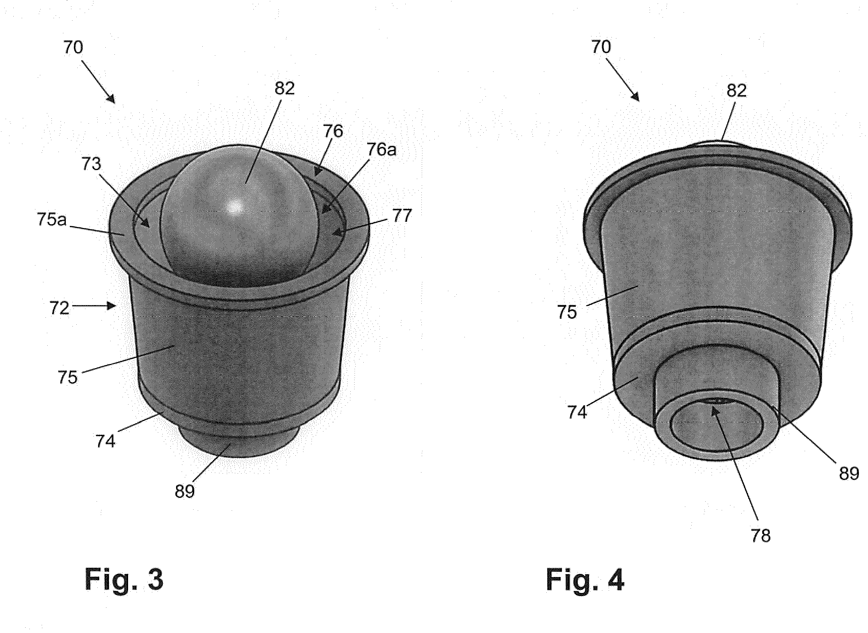

aus der sich die Funktionsweise der in den Figuren 3 bis 5 dargestellten Kondensatablaufeinrichtung ergibt.

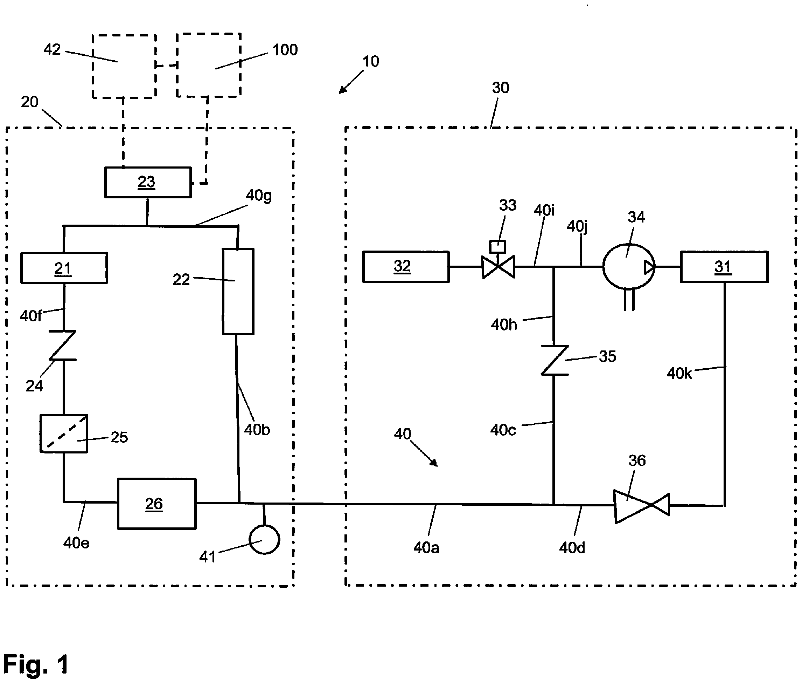

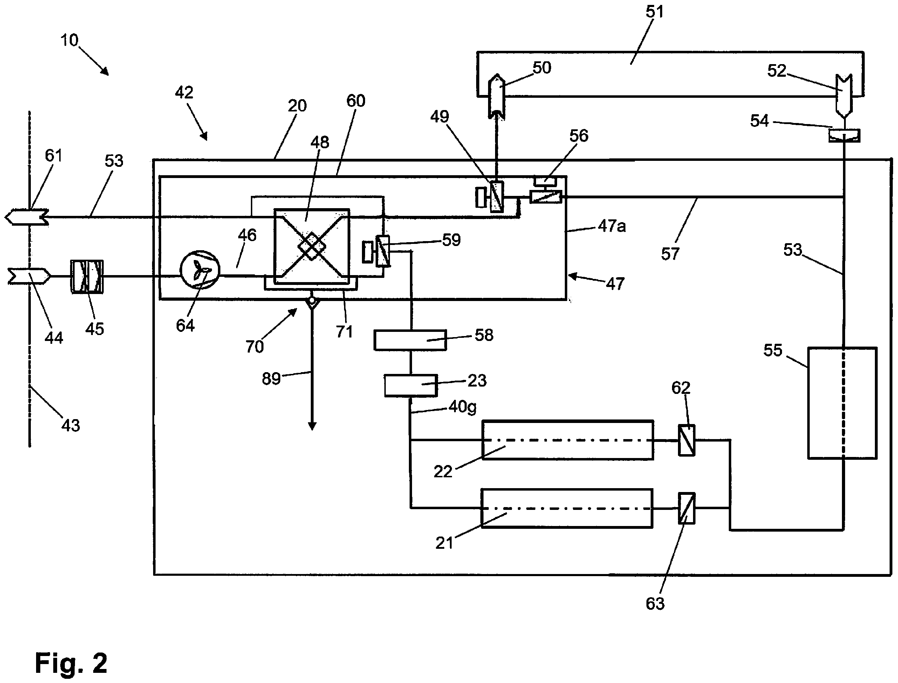

In den Figuren 1 und 2 wird zur Verdeutlichung des Hintergrunds der vorliegenden Erfindung und zur Einbettung der Erfindung in einem Energiesystem zunächst ganz allgemein ein Energiesystem 10 vorgestellt und beschrieben, in dem die vorliegende Erfindung verwirklicht ist. In Figur 1 wird zunächst der grundsätzliche Aufbau eines solchen Energiesystems 10 beschrieben, wobei das Energiesystem 10 als Gebäudeenergiesystem eingesetzt wird. In Figur 2 ist zudem dargestellt, wie das Energiesystem 10 um ein geeignetes Lüftungssystem 42 erweitert wird.

Gemäß Figur 1 weist das Energiesystem 10 zunächst ein erstes Untersystem 20 auf, welches als Innensystem ausgebildet ist. Das bedeutet, dass sich das erste Untersystem 20 innerhalb des Gebäudes befindet. Zusätzlich weist das Energiesystem 10 ein zweites Untersystem 30 in Form eines Außensystems auf. Das bedeutet, dass sich das zweite Untersystem 30 außerhalb des Gebäudes befindet.

Das erste Untersystem 20 weist ein Elektrolysemodul 21 zur Herstellung von Wasserstoff auf. Zudem weist das erste Untersystem 20 ein Brennstoffzellenmodul 22 auf.

Das zweite Untersystem 30 weist eine Hochdruckspeichereinrichtung 31 auf. In der Hochdruckspeichereinrichtung 31 wird der erzeugte Wasserstoff bei bis zu 700 bar gespeichert. Zusätzlich verfügt das zweite Untersystem 30 über eine Mitteldruckspeichereinrichtung 32, in der der erzeugte Wasserstoff bei Drücken zwischen 20 und 30 bar zwischengespeichert wird, bevor er von dort endgültig in der Hochdruckspeichereinrichtung 31 gespeichert wird.

Die einzelnen Komponenten des Energiesystems 10 sind über eine Verbindungsleitungseinrichtung 40 miteinander verbunden, die aus einer Anzahl unterschiedlicher Leitungsabschnitte 40a bis 40k besteht.

Zum Spülen des Elektrolysemoduls 21 und/oder des Brennstoffzellenmoduls 22 ist eine Spüleinrichtung 23 mit einer Spülkammer vorgesehen, die über einen Leitungsabschnitt 40g mit den beiden vorgenannten Komponenten verbunden ist.

Der in dem Elektrolysemodul 21 mittels Elektrolyse hergestellte Wasserstoff verlässt das Elektrolysemodul 21 über einen Leitungsabschnitt 40f, welcher in den Leitungsabschnitt 40e übergeht. In den beiden Leitungsabschnitten 40f und 40e befinden sich in Strömungsrichtung des erzeugten Wasserstoffs eine Rückschlagventileinrichtung 24 sowie nachfolgend eine Filtereinrichtung 25 und eine Trocknereinrichtung 26, in denen der erzeugte Wasserstoff gefiltert und getrocknet wird. Die Filtereinrichtung 25 und die Trocknereinrichtung 26 können sich alternativ auch im zweiten Untersystem 30 befinden.

Von der Trocknereinrichtung 26 strömt der erzeugte Wasserstoff über die Leitungsabschnitte 40a und 40c zu einer weiteren Rückschlagventileinrichtung 35, welche ein Ende des Leitungsabschnitts 40c markiert. Von dort strömt der erzeugte Wasserstoff über einen Leitungsabschnitt 40h sowie 40i in den Mitteldruckspeicher 32, welcher über eine Ventileinrichtung 33, die insbesondere als Sperrventil, beispielsweise in Form eines Magnetventils, ausgebildet ist, an einem weiteren Leitungsabschnitt 40j angebunden ist. In dem Leitungsabschnitt 40j, der in der Hochdruckspeichereinrichtung 31 endet, befindet sich vor der Hochdruckspeichereinrichtung 31 eine Kompressoreinrichtung 34, insbesondere in Form eines Kolbenkompressors. Über die Kompressoreinrichtung 34 wird der erzeugte Wasserstoff in die Hochdruckspeichereinrichtung 31 eingespeichert. Der in der Mitteldruckspeichereinrichtung 32 zwischengespeicherte Wasserstoff wird unter Betätigung der Kompressoreinrichtung 34 in der Hochdruckspeichereinrichtung 31 eingespeichert.

Dieser Herstellungsvorgang des Wasserstoffs bis hin zu dessen Einspeicherung in der Hochdruckspeichereinrichtung 31 stellt eine erste Betriebsweise des Energiesystems 10 dar. Bei dieser ersten Betriebsweise des Energiesystems 10 herrscht in den Leitungsabschnitten 40a bis 40e der Verbindungsleitungseinrichtung 40 ein Druck von 20 bis 60 bar. Ein solcher Druck herrscht auch im Mitteldruckspeicher 32. Über die Kompressoreinrichtung 34 wird der aus der Mitteldruckspeichereinrichtung 32, bei der es sich um einen Zwischenspeicher handelt, entnommene Wasserstoff so weit komprimiert, dass er mit Drücken von bis zu 700 bar in der Hochdruckspeichereinrichtung 31 eingespeichert werden kann.

Der in der Hochdruckspeichereinrichtung 31 gespeicherte Wasserstoff wird für den Betrieb des Brennstoffzellenmoduls 22 verwendet. Der Betrieb des Brennstoffzellenmoduls 22 erfolgt in der zweiten Betriebsweise des Energiesystems 10. Das Brennstoffzellenmodul 22 kann aber nur bei Drücken kleiner 20 bar arbeiten. In der zweiten Betriebsweise des Energiesystems 10 wird der Wasseroff über einen Leitungsabschnitt 40k aus der Hochdruckspeichereinrichtung 31 entnommen, über eine Entspannungseinrichtung 36 in Form eines Druckminderers auf den erforderlichen Druck entspannt und über einen Leitungsabschnitt 40d in den bidirektionalen Leitungsabschnitt 40a transportiert, von wo aus er über den Leitungsabschnitt 40b in das Brennstoffzellenmodul 22, und dort zunächst in die Filtereinrichtung 22b, eintritt. Zur Messung des Drucks ist wenigstes eine Druckmesseinrichtung 41, beispielsweise in Form eines Drucksensors vorgesehen.

Der Betrieb des Brennstoffzellenmoduls 22 erfordert zudem die Zufuhr von Luft. Diese dient zum einen als Reaktand, vorzugsweise gleichzeitig auch zur Kühlung. Ähnliches gilt auch für das Elektrolysemodul 21. Denn beim Betrieb des Brennstoffzellenmoduls 22 und des Elektrolysemoduls 21 entsteht Wärme, die in Form von Abwärme abgeführt und für weitere Prozesse genutzt werden kann. Beispielsweise kann der das Brennstoffzellenmodul 22 verlassende Luftstrom war und gegebenenfalls auch feucht sein. Die Wärme kann beispielsweise für weitere Prozesse genutzt werden. Ebenso kann die im Luftstrom vorhandene Feuchtigkeit auskondensiert werden. Das Kondensat kann ebenfalls für weitere Prozesse verwendet werden.

Das in Figur 1 dargestellte Energiesystem 10 stellt einen Teilbereich eines Gesamt-Gebäudeenergiesystems dar, bei dem es sich um ein elektrisch autarkes und vollständig auf erneuerbaren Energien beruhendes multihybrides Gebäudeenergiespeichersystem handelt.

Das multihybride Gebäudeenergiespeichersystem ermöglicht es, die von einer Photovoltaik (PV)-Anlage, einer Kleinwindkraftanlage oder dergleichen erzeugte elektrische Energie bedarfsgesteuert auf das gesamte Jahr zu verteilen. Dabei kann das System als Inselsystem unabhängig vom elektrischen Netz oder aber bei Netzausfällen als Ersatzstromversorgung betrieben werden. Die Anlage kann auch die elektrische Autarkie des Gebäudes gewährleisten, sodass über das ganze Jahr hinweg keine elektrische Energie aus dem Stromnetz bezogen werden muss.

Die primäre Aufgabe des Gebäudeenergiesystems ist es, die gewonnene elektrische Energie aus Photovoltaik (PV)-Modulen oder dergleichen dem Verbraucher im Gebäude verfügbar zu machen. Sekundär können bei Zeiten niedriger Last oder hoher Einstrahlung elektrische Energieüberschüsse in einem Batterie-Kurzzeit-Speicher zwischengespeichert werden. Tertiär kann im Wasserstoff-Langzeit-Speicher die elektrische Energie als gasförmiger Wasserstoff für Zeiten niedriger Einstrahlung wie Nacht, Winter oder dergleichen mittel- bis langfristig gespeichert und mittels Brennstoffzelle wieder jederzeit bedarfsgerecht zur Verfügung gestellt werden.

Neben energietechnischen Aufgaben fungiert das Energiesystem auch als kontrollierte Raumlüftung durch ein verbautes Lüftungssystem 42, das in Figur 2 dargestellt ist. Bei Brennstoffzellenbetrieb kann die Abwärme des Brennstoffzellenmoduls beispielsweise über die kontrollierte Raumlüftung direkt als Wärme an die Frischluft und damit an die Räume abgegeben werden.

Der im Elektrolysemodul produzierte Wasserstoff fließt über die Wasserstoffleitung in die außenaufgestellte Druckspeicheranlage.

Bei fehlender oder nicht ausreichender PV-Energie wird Energie aus der Batterie zur Deckung der Verbraucherlast entnommen. Reicht die im Kurzzeitspeicher vorrätige Energie nicht aus, kann das Brennstoffzellenmodul den zusätzlichen elektrischen Energiebedarf decken. Im Brennstoffzellenbetrieb fließt der Wasserstoff über die Wasserstoffleitung aus der Druckspeicheranlage zum Brennstoffzellenmodul.

Ein zeitgleicher Betrieb von Brennstoffzellenmodul und Elektrolysemodul ist ausgeschlossen. Das gesamte System wird zentral über einen Energy Manager mit einem prädiktiven Energiemanagement betrieben.

Das zweite Untersystem ist prinzipiell für den Betrieb im Außenbereich vorgesehen, kann aber unter bestimmten Bedingungen auch innerhalb eines speziellen Bereichs des Gebäudes errichtet und betrieben werden.

Das Energiesystem 10 kann zur effektiven Nutzung einzelner Komponenten oder zur Weiterverwertung einzelner Prozessprodukte mit anderen Systemen oder Teilsystemen verbunden sein. Bei einem dieser weiteren Systeme handelt es sich, wie in Figur 1 schematisch dargestellt ist, um ein Lüftungssystem 42, welches nachfolgend anhand von Figur 2 erläutert wird. Oder aber es handelt sich um eine Wärmepumpeneinrichtung 100. Das Lüftungssystem 42 und/oder die Wärmepumpeneinrichtung 100 wirkt dabei bevorzugt mit dem Brennstoffzellenmodul 22 zusammen, kann aber auch mit dem Elektrolysemodul 21 zusammenwirken.

In der Figur 2 ist in stark vereinfachter Weise ein Lüftungssystem 42 dargestellt, welches ein Bestandteil des Energiesystems 10 ist. Das Lüftungssystem 42 dient zum Einstellen eines gewünschten Raumklimas in wenigstens einem Raum, beispielsweise einem Raum in einem Gebäude. Neben der Darstellung in den Figuren 1 und 2 können das Lüftungssystem 42 und das Energiesystem 10, bei denen es sich jeweils um komplexe Systeme handelt, natürlich noch weitere Systemkomponenten aufweisen.

Das Lüftungssystem 42 befindet sich innerhalb des Gebäudes, von dem schematisch nur eine Gebäudewand 43 dargestellt ist.

Ein Bauteil des Lüftungssystems 42 wird durch eine Systemkomponente 47 gebildet, die ein Gehäuse 47a aufweist, in dem sich ein Wärmeübertrager 48 befindet, der beispielsweise als Kreuzwärmeübertrager ausgebildet ist. Bei der Systemkomponente 47 handelt es sich beispielsweise um eine Lüftungskomponente. In dem in Figur 2 gezeigten Ausführungsbeispiel befindet sich die Systemkomponente 47 ebenfalls in dem in Figur 1 dargestellten ersten Untersystem 20. Das ist aber nicht zwingend erforderlich. Außenluft von außerhalb des Gebäudes wird über eine Außenluftzufuhr 44 in Form eines Zuluftstroms 46 in die Systemkomponente 47 eingeführt und über den Wärmeübertrager 48 geführt. Dies wird durch ein Gebläse 64 unterstützt. In dem Zuluftstrom 46 ist in Strömungsrichtung hinter der Außenluftzufuhr 44 eine Außenluft-Filtereinrichtung 45 angeordnet.

Nach Verlassen des Wärmeübertragers 48 wird der Zuluftstrom 46 über eine Einrichtung 49 zur Einstellung des Zuluftstroms, welche als Zuluftklappe oder als Zuluft-Ventileinrichtung ausgebildet sein kann, über eine Zuluftzufuhr 50 in eine in einem Raum befindliche Lüftungsanlage 51 eingebracht. Über eine Einrichtung zur Einstellung des Zuluftstroms (nicht dargestellt) kann die in die Lüftungsanlage 51 eintretende Zuluft mengenmäßig eingestellt werden. Ist die Einrichtung zur Einstellung des Zuluftstroms komplett geschlossen, kann keine Zuluft in die Lüftungsanlage 51 und damit in den Raum eintreten. Ist die Einrichtung hingegen vollständig geöffnet, tritt ein Maximum an Zuluft über die Zuluftzufuhr 50 in die Lüftungsanlage 51 ein. Um eine für den Nutzer des Lüftungssystems 42 geeignete Regelungsmöglichkeit der Zuluft zu schaffen, ist weiterhin eine Bypasseinrichtung 56 vorgesehen, welche als Bypassklappe oder Bypass-Ventileinrichtung ausgebildet sein kann. Über diese Bypasseinrichtung 56 kann wahlweise zumindest ein gewisser Mengenanteil der Zuluft aus der Zuluftzufuhr 50 abgezweigt und in Form eines Bypassstroms 57 an der Lüftungsanlage 51 vorbeigeführt werden.

Aus dem Raum über die Lüftungsanlage 51 austretende Abluft wird über eine Abluftabfuhr 52 in Form eines Abluftstroms 53 abgeführt. Hinter der Abluftabfuhr 52 ist im Abluftstrom 53 eine Abluft-Filtereinrichtung 54 angeordnet. Zu Kühlungszwecken wird der Abluftstrom 53 durch eine Kurzzeitspeichereinrichtung 55 in Form einer Batterieeinrichtung geführt.

Danach kann der Abluftstrom 53, über entsprechenden Leitungsabschnitte sowie über entsprechende Klappen 62, 63 oder Ventileinrichtungen gesteuert, wahlweise durch das Elektrolysemodul 21 und/oder das Brennstoffzellenmodul 22 geführt werden, und anschließend über den Leitungsabschnitt 40g aus Figur 1 noch über eine Spüleinrichtung 23 für das Elektrolysemodul 21 und/oder das Brennstoffzellenmodul 22, wie auch aus Figur 1 ersichtlich ist, sowie noch über eine Kühleinrichtung oder einen Luft/Wasserübertrager 58, bevor der Abluftstrom 53 wieder in die Systemkomponente 47 eintritt.

In der Systemkomponente 47 wird der Abluftstrom 53 wieder über den Wärmeübertrager 48 geführt, wo er seine gespeicherte Wärme an den Zuluftstrom 46 übertragen kann. Je nach Betriebsweise und Ausgangslage kann der Abluftstrom 53 aber auch am Wärmeübertrager 48 vorbei geleitet werden. Dies geschieht mittels einer Bypasseinrichtung 59, die beispielsweise als Bypassklappe oder Bypass-Ventileinrichtung ausgebildet ist. Bei einer entsprechenden Betätigung der Bypasseinrichtung 59 kann der Abluftstrom 53 über einen Abluftbypassstrom 60 an dem Wärmeübertrager 48 vorbei geleitet werden. Der Abluftstrom 53 verlässt die Systemkomponente 47 über eine Fortluftabfuhr 61, über die der Abluftvolumenstrom 53 in Form eines Fortluftstroms das Gebäude wieder verlässt.

Der durch die Systemkomponente 47 hindurchströmende Gasstrom kann Feuchtigkeit aufweisen, die während des Betriebs als Kondensat anfällt. Beispielsweise kann ein solches Kondensat im Wärmeübertrager 48 anfallen. Dieses Kondensat soll zweckmäßigerweise aus der Systemkomponente 47 entfernt werden, was mit Hilfe einer erfindungsgemäßen Kondensatablaufeinrichtung 70 erfolgt. In Figur 2 ist eine Situation dargestellt, in der das Kondensat aus dem Wärmeübertrager 48 zunächst in einer Wanne 71 gesammelt wird, bevor es über die Kondensatablaufeinrichtung 70 und eine daran angeschlossene Abfuhreinrichtung 89 in Form einer Abfuhrleitung aus der Systemkomponente 47 angeführt wird. Das Kondensat kann aber auch direkt in die Kondensatablaufeinrichtung 70 eintreten. In diesem Fall ist eine Wanne 71 nicht erforderlich

Der Aufbau und die Funktionsweise der erfindungsgemäßen Kondensatablaufeinrichtung 70 wird nun anhand der Figuren 3 bis 7 im Detail erläutert.

In den Figuren 3 bis 5 wird zunächst der grundsätzliche Aufbau der Kondensatablaufeinrichtung 70 dargestellt.

Eine erste Grundkomponente besteht aus dem Kondensatbehälter 72. Dieser weist einen Aufnahmeraum 73 auf, der durch einen Behälterboden 74, eine von diesem nach oben abragende Behälterseitenwandung 75 und einen am oberen Rand 75a der Behälterseitenwandung 75 befindlichen oberen Abschluss 76 mit einer Behälteröffnung 76a begrenzt ist. Die Behälteröffnung 76a soll so groß wie möglich sein. Deshalb erstreckt sich die Behälteröffnung 76a im gezeigten Beispiel am oberen Rand 75a der Seitenwandung 75 über die gesamte Querschnittsfläche des Kondensatbehälters 72. Der Kondensatbehälter 72 hat die Form eines Bechers. Um die Behälteröffnung 76a so groß wie möglich zu gestalten, weist die Behälterseitenwandung 75 einen schrägen Verlauf auf, wobei sich die Behälterseitenwandung 75 vom Behälterboden 74 in Richtung des oberen Rands 75a nach außen aufweitet und somit einen konischen Verlauf hat.

Die Behälteröffnung 76a stellt den Kondensatzulauf 77 dar, über den das Kondensat in den Kondensatbehälter 72 eintritt. Im Behälterboden 74 befindet sich ein Kondensatablauf 78 in Form einer Kondensatablauföffnung 79. Der Kondensatablauf 78 ist bevorzugt mittig in dem Behälterboden 74 ausgebildet. Über den Kondensatablauf 78 kann das im Kondensatbehälter 72 befindliche Kondensat abfließen. Dazu tritt es über den Kondensatablauf 78 aus dem Kondensatbehälter 72 aus und wird optional über eine sich anschließende Abfuhreinrichtung 89, die beispielsweise als Abfuhrleitung, Abfuhrflansch oder dergleichen ausgebildet ist, abgeführt.

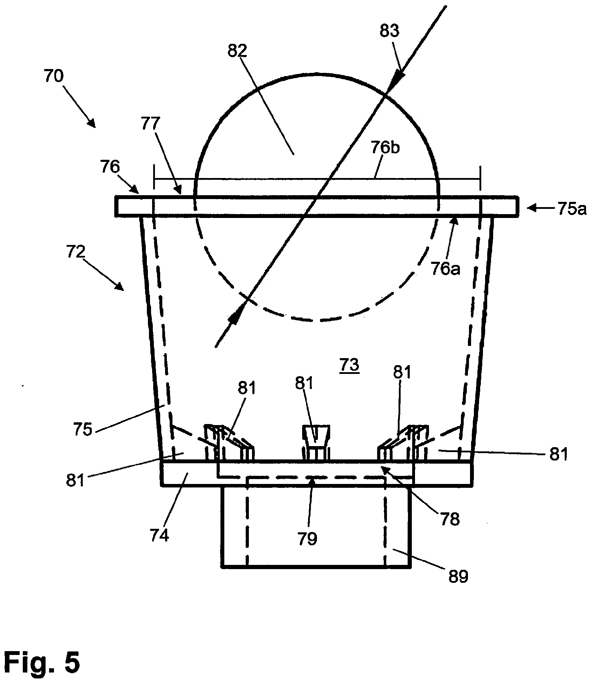

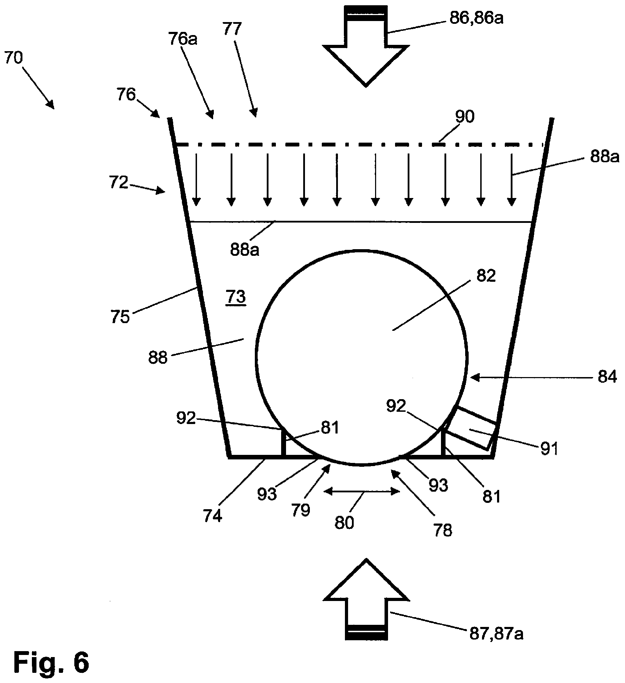

Eine weitere Grundkomponente der Kondensatablaufeinrichtung 70 besteht aus einem Aufschwimmkörper 82, der hier in Form einer Kugel ausgebildet ist, und der innerhalb des Aufnahmeraus 73 platziert ist. Der Aufschwimmkörper 82 kann einen definierten Durchmesser 83 und/oder ein definiertes Volumen und/oder ein definiertes Eigengewicht aufweisen. Die Funktionsweise des Aufschwimmkörpers 82 wird später anhand von Figur 6 erläutert. Die maximale Ausdehnung 76b der Behälteröffnung 76a ist größer als die maximale Ausdehnung 83 des Aufschwimmkörpers 82, wie in Figur 5 verdeutlicht ist.

Der Aufschwimmkörper 82 dient dazu, die Kondensatablauföffnung 79 des Kondensatablaufs 78 zu verschließen. Dazu ist im Bereich des Behälterbodens 74 eine entsprechende Auflageeinrichtung 81 vorgesehen, die lösbar oder unlösbar am Behälterboden 74 angeordnet oder ausgebildet sein kann. Im vorliegenden Fall besteht die Auflageeinrichtung 81 aus einer Anzahl von Abstützelementen oder Finnen, die in der Peripherie des Kondensatablaufs 78 jeweils beabstandet zueinander um die Kondensatablauföffnung 79 herum angeordnet sind. Die Abstützelemente oder Finnen weisen einen schräg verlaufenden oberen Rand auf, wobei die Höhe der Abstützelemente oder Finnen, gemessen vom Behälterboden 74, von der Kondensatablauföffnung 79 aus gesehen nach außen in Richtung der Behälterseitenwandung 75 hin ansteigt. Dadurch wird gewährleistet, dass der Aufschwimmkörper 82 stets sicher und definiert gehalten wird, wenn er auf der Auflageeinrichtung 81 aufliegt und die Kondensatablauföffnung 79 verschließt.

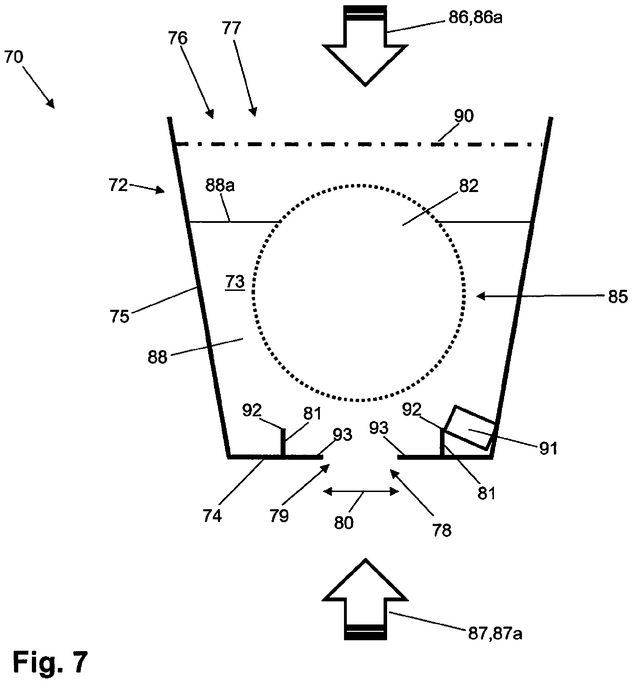

In den Figuren 6 und 7 wird nun die Funktionsweise der in den Figuren 3 bis 5 dargestellten und beschriebenen Kondensatablaufeinrichtung 70 beschrieben. Dabei zeigt Figur 6 einen Zustand, in dem sich der Aufschwimmkörper 82 in der unteren Schließposition 84 befindet. Figur 7 zeigt den Zustand, in dem sich der Aufschwimmkörper 82 in der oberen Öffnungsposition 85 befindet.

Die Kondensatablaufeinrichtung 70 dient dazu, um ein Kondensat, das in einem Gasstrom anfällt und aus diesem abgeschieden wird, zu sammeln und abzuleiten. Wo und wie dies geschieht, ist allgemein beispielsweise im Zusammenhang mit den Figuren 1 und 2 beschrieben.

Die Kondensatablaufeinrichtung 70 weist den im Zusammenhang mit den Figuren 3 bis 5 dargestellten und beschriebenen Aufbau auf. Der Aufschwimmkörper 82 ist derart in dem Kondensatbehälter 73 angeordnet, dass er in der Lage ist, sich zwischen einer unteren Schließposition 84, in der der Aufschwimmkörper 82 die Kondensatablauföffnung 79 des Kondensatablaufs 78 verschließt, und einer oberen Öffnungsposition 85, in der der Aufschwimmkörper 82 den Kondensatablauf 78 freigibt, zu bewegen.

Im Ausgangszustand, der in Figur 6 gezeigt ist, liegt der Aufschwimmkörper 82 auf der Auflageeinrichtung 81 auf und verschließt den Kondensatablauf 78. Anfallendes Kondensat 88 tritt über die große Behälteröffnung 76a des Kondensatbehälters 72, die den Kondensatzulauf 77 bildet, in den Aufnahmeraum 73 des Kondensatbehälters 72 ein und wird in diesem gesammelt. Da der Aufschwimmkörper 82 auf der Auflageeinrichtung 81 aufliegt, kann er von allen Seiten von dem Kondensat 88 umspült werden. Das Kondensat 88 läuft an dem Aufschwimmkörper 82, vorzugsweise seitlich, insbesondere allseitig, vorbei, was in Figur 6 durch die Pfeile 88a angedeutet ist.

Hat sich eine genügend große Menge an Kondensat 88 im Kondensatbehälter 72, angesammelt, bewegt sich der Aufschwimmkörper 82 aus seiner unteren Schließposition 84 in seine obere Öffnungsposition 85 und gibt die Kondensatablauföffnung 79 des Kondensatablaufs 78 frei. Dies ist in Figur 7 dargestellt. Die Kondensatablauföffnung 79 hat eine definierte Öffnungsfläche 80. Das im Kondensatbehälter 72 befindliche Kondensat 88 fließt über den Kondensatablauf 78 und die Abfuhreinrichtung 89 aus dem Kondensatbehälter 72 ab. Der Aufschwimmkörper 82 schwimmt spätestens dann auf, wenn die Oberfläche 88a des Kondensats 88 den Aufschwimmkörper 82 in seiner unteren Schließposition 84 übersteigt.

Dies wird nachfolgend im Detail erläutert. Das erfindungsgemäße Verfahren sieht vor, dass die Kondensatablaufeinrichtung 70 in einer Umgebung zum Einsatz kommt, in der unterschiedliche Druckniveaus herrschen. Im Bereich des Kondensatzulaufs 77, das heißt an oder in der Behälteröffnung 76a, etwa in einer entsprechenden Systemkomponente, liegt ein höheres Druckniveau 86 an, als dies im Bereich des Kondensatablaufs 78 der Fall ist. Dort soll ein niedrigeres Druckniveau 87 herrschen. Das bedeutet, dass am Kondensatzulauf 77 ein Überdruck 86a herrscht im Vergleich zum Druck 87a von außen am Kondensatablauf 78, bei dem es sich beispielswiese um den Umgebungsdruck handelt.

Der Aufschwimmkörper 82 bewegt sich im gezeigten Ausführungsbeispiel dann aus seiner unteren Schließposition 84 in seine obere Öffnungsposition 85, wenn die Bedingung erfüllt ist, dass die Auftriebskraft, $F_{Auftrieb}$, des Aufschwimmkörpers 82 größer ist als die Summe aus Verschlusskraft, $F_{Verschluss}$, in Bezug auf den Kondensatablauf 78 und die Gewichtskraft, $F_G$, des Aufschwimmkörpers 82 aufgrund dessen Eigengewichts. Hinsichtlich dieser Bedingung wird auch auf die entsprechenden Ausführungen in der allgemeinen Beschreibung weiter oben vollinhaltlich Bezug genommen und verwiesen.

Der Aufschwimmkörper 82 kann sich im Aufnahmeraum 73 des Kondensatbehälter 72 frei bewegen. Damit der Aufschwimmkörper 82 den Kondensatbehälter 72 nicht ungewollt verlassen kann, ist im oberen Bereich des Kondensatbehälters 72, in der Nähe der Behälteröffnung 76a, ein Absperrelement 90 in Form eines Absperrgitters im Kondensatbehälter 72 angeordnet oder ausgebildet. Bewegt sich der Aufschwimmkörper 82 nach dem Abblassen des Kondensats 88 aus seiner oberen Öffnungsposition 85 zurück in seine untere Schließposition 84, wird durch die besondere Ausgestaltung der Auflageeinrichtung 81, wie in den Figuren 3 bis 5 beschrieben, sichergestellt, dass der Aufschwimmkörper 82 die Kondensatablauföffnung 79 des Kondensatablaufs 78 stets sicher verschließt, da der Aufschwimmkörper 82 durch die besondere Ausgestaltung der einzelnen Abstützelemente oder Finnen in die Auflageeinrichtung 81 "einfädelt" und in Richtung des Kondensatablaufs 78 geleitet wird.

In den Figuren 6 und 7 ist schematisch jeweils eine Einrichtung 91 zur Durchflusserkennung dargestellt. Diese kann beispielsweise in Form eines dem Aufschwimmkörpers 82 zugeordneten Mikrotasters vorliegen, der betätigt wird, wenn sich der Aufschwimmkörper82 aus seiner unteren Schließposition 84 wegbewegt oder in diese zurückkehrt. Zudem können die Auflageeinrichtung 81 und/oder der Peripheriebereich um den Kondensatablauf 78 beziehungsweise um die Kondensatablauföffnung 79 geeignete Dichtflächen 92, 93 aufweisen.

**Bezugszeichenliste**

| | |
|---|---|
| 10 | Energiesystem (Gebäudeenergiesystem) |
| 20 | Erstes Untersystem (Innensystem) |
| 21 | Elektrolysemodul |
| 22 | Brennstoffzellenmodul |
| 23 | Spüleinrichtung (Spülkammer) |
| 24 | Rückschlagventileinrichtung |
| 25 | Filtereinrichtung |
| 26 | Trocknereinrichtung |
| 30 | Zweites Untersystem (Außensystem) |
| 31 | Hochdruckspeichereinrichtung |
| 32 | Mitteldruckspeichereinrichtung |
| 33 | Ventileinrichtung |
| 34 | Kompressoreinrichtung |
| 35 | Rückschlagventileinrichtung |
| 36 | Entspannungsvorrichtung (Druckminderer) |
| 40 | Verbindungsleitungseinrichtung |
| 40a bis 40k | Leitungsabschnitt |
| 41 | Druckmessvorrichtung |
| 42 | Lüftungssystem |
| 43 | Gebäudewand |
| 44 | Außenluftzufuhr |
| 45 | Außenluft-Filtereinrichtung |
| 46 | Zuluftstrom |
| 47 | Systemkomponente |
| 47a | Gehäuse der Systemkomponente |
| 48 | Wärmeübertrager (Kreuzwärmeübertrager) |
| 49 | Einrichtung zur Einstellung des Zuluftstroms (Zuluftklappe) |
| 50 | Zuluftzufuhr |
| 51 | Lüftungsanlage |
| 52 | Abluftabfuhr |
| 53 | Abluftstrom |
| 54 | Abluft-Filtereinrichtung |
| 55 | Kurzzeitspeichereinrichtung |
| 56 | Bypasseinrichtung |
| 57 | Bypassstrom |
| 58 | Luft/Wasserübertrager |
| 59 | Bypasseinrichtung |
| 60 | Abluftbypassstrom |
| 61 | Fortluftabfuhr |
| 62 | Brennstoffzellenmodulklappe |
| 63 | Elektrolysemodulklappe |
| 64 | Gebläse |
| 70 | Kondensatablaufeinrichtung |
| 71 | Wanne |
| 72 | Kondensatbehälter |
| 73 | Aufnahmeraum |
| 74 | Behälterboden |
| 75 | Behälterseitenwandung |
| 75a | Oberer Rand der Behälterseitenwandung |

| 76 | Oberer Abschluss der Kondensatbehälters |
|---|---|
| 76a | Behälteröffnung |
| 76b | Maximale Ausdehnung der Behälteröffnung |
| 77 | Kondensatzulauf |
| 78 | Kondensatablauf |
| 79 | Kondensatablauföffnung |
| 80 | Öffnungsfläche des Kondensatablaufs |
| 81 | Auflageeinrichtung |
| 82 | Aufschwimmkörper |
| 83 | Maximale Ausdehnung des Aufschwimmkörpers |
| 84 | Untere Schließposition |
| 85 | Obere Öffnungsposition |
| 86 | Höheres Druckniveau |
| 86a | Überdruck am Kondensatzulauf |
| 87 | Niedrigeres Druckniveau |
| 87a | Druck von außen am Kondensatablauf |
| 88 | Kondensat |
| 88a | Strömungsverlauf des Kondensats |
| 88b | Kondensatoberfläche |
| 89 | Abfuhreinrichtung |
| 90 | Absperrelement |
| 91 | Einrichtung zur Durchflusserkennung |
| 92 | Dichtfläche |
| 93 | Dichtfläche |
| 100 | Wärmepumpeneinrichtung |

**Patentansprüche**

1. Verfahren zum Ableiten von aus einem, insbesondere strömenden, gasförmigen Medium abgeschiedenem Kondensat, wobei in dem gasförmigen Medium anfallendes Kondensat (88) in einer Kondensatablaufeinrichtung (70) gesammelt und aus dieser abgeführt wird, wobei die Kondensatablaufeinrichtung (70) aufweist:

   einen nach oben offenen Kondensatbehälter (72), der einen Aufnahmeraum (73) aufweist, der nach unten durch einen Behälterboden (74), seitlich durch eine Behälterseitenwandung (75) und nach oben durch einen oberen Abschluss (76) mit einer Behälteröffnung (76a) begrenzt ist,
   einen Kondensatzulauf (77) im oberen Abschluss (76) des Kondensatbehälters (72), der durch die Behälteröffnung (76) gebildet ist,
   einen Kondensatablauf (78) im unteren Bereich des Kondensatbehälters (72), insbesondere im Behälterboden (74), über den im Kondensatbehälter (72) angesammeltes Kondensat (88) abgeführt wird,
   einen Aufschwimmkörper (82) im Aufnahmeraum (73) des Kondensatbehälters (72), wobei der Aufschwimmkörper (82) derart in dem Aufnahmeraum (73) des Kondensatbehälters (72) angeordnet ist, dass er in der Lage ist, sich zwischen einer unteren Schließposition (84), in der der Aufschwimmkörper (82) den Kondensatablauf (78) verschließt und einer oberen Öffnungsposition (85), in der der Aufschwimmkörper (82) den Kondensatablauf (78) freigibt, zu bewegen, wobei die maximale Ausdehnung (76b) der Behälteröffnung (76a) größer ist als die maximale Ausdehnung (83) des Aufschwimmkörpers (82), **gekennzeichnet durch** folgende Schritte:

   a) In dem gasförmigen Medium vor dem Kondensatzulauf (77), an dem ein höheres Druckniveau (86) anliegt als das Druckniveau (87), welches von außen an dem Kondensatablauf (78) anliegt, anfallendes Kondensat (88) tritt über die Behälteröffnung (76a) in den Aufnahmeraum (73) des Kondensatbehälters (72) ein, in dem sich der Aufschwimmkörper (82) zunächst in der unteren Schließposition (84) befindet und den Kondensatablauf (78) verschließt, läuft an dem Aufschwimmkörper (82), vorzugsweise allseitig, vorbei und umspült den Aufschwimmköroper (82), vorzugsweise allseitig;
   b) Der Aufschwimmkörper (82) bewegt sich aus seiner unteren Schließposition (84) in seine obere Öffnungsposition (85), wenn die Bedingung erfüllt ist, dass die Auftriebskraft, $F_{Auftrieb}$, des Aufschwimmkörpers (82) größer ist als die auf den Aufschwimmkörper (82) einwirkenden Gegenkräfte;
   c) Der Kondensatablauf (78) wird freigegeben und das im Kondensatbehälter (72) befindliche Kondensat (88) fließt über den Kondensatablauf (78) aus dem Kondensatbehälter (72) ab.

2. Verfahren nach Anspruch 1, **dadurch gekennzeichnet, dass** sich der Aufschwimmkörper (82) in Schritt b) aus seiner unteren Schließposition (84) in seine obere Öffnungsposition (85) bewegt, wenn die Bedingung erfüllt ist, dass die Auftriebskraft, $F_{Auftneb}$, des Aufschwimmkörpers (82) größer ist als die Summe aus Verschlusskraft, $F_{Verschluss}$, in Bezug auf den Kondensatablauf (78) und die Gewichtskraft, $F_G$, des Aufschwimmkörpers (82) aufgrund dessen Eigengewichts.

3. Verfahren nach Anspruch 1 oder 2, **dadurch gekennzeichnet, dass** das gasförmige Medium durch eine Systemkomponente (47) eines Systems, insbesondere eines Energiesystems (10), hindurchströmt, dass in dem Gasstrom anfallendes Kondensat in der Kondensatablaufeinrichtung (70), welche mit der Systemkomponente (47) zusammenwirkt, gesammelt und aus dieser abgeführt wird, und dass insbesondere die Strömung des gasförmigen Mediums in der Systemkomponente (47) mittels eines Gebläses (64) erzeugt oder unterstützt wird und/oder dass das gasförmige Medium einen in der Systemkomponente (47) befindlichen Wärmeübertrager (48) durchströmt.

4. Verfahren nach einem der Ansprüche 1 bis 3, **dadurch gekennzeichnet, dass** der Zeitpunkt, wann sich der Aufschwimmkörper (82) aufgrund des im Aufnahmeraum (73) des Kondensatbehälters (72) befindlichen Kondensats (88) aus seiner unteren Schließposition (84) in seine obere Öffnungsposition (85) bewegt und den Kondensatablauf (78) freigibt, variabel beeinflusst wird, indem das Druckniveau (86) in dem gasförmigen Medium vor dem Kondensatzulauf (77) beeinflusst wird, und/oder indem ein Aufschwimmkörper (82) bezüglich seines Volumens und/oder seines Eigengewichts ausgewählt wird in Abhängigkeit von der Öffnungsfläche (80) des Kondensatablaufs (78) und/oder von der Dichte des Kondensats (88) und/oder von dem an der Behälteröffnung (76a) herrschenden Überdruck (86a) und/oder von dem außen am Kondensatablauf (78) anliegenden Druck (87a)

5. Verfahren nach Anspruch 4, **dadurch gekennzeichnet, dass** der zur Durchführung des Verfahrens verwendete Aufschwimmkörper (82) an vorgegebene Druckwerte (86a, 87a) angepasst wird, und/oder dass die Druckwerte (86a, 87a) an einen vorgegebenen Aufschwimmkörper (82) angepasst werden.

6. Verfahren nach einem der Ansprüche 1 bis 5, **dadurch gekennzeichnet, dass** mittels einer Einrichtung (91) zur Durchflusserkennung das Öffnen, insbesondere die Frequenz des Öffnens, der Kondensatablauföffnung (79) erfasst und daraus ein Leckagevolumenstrom an Flüssigkeit, beispielsweise an Wasser, oberhalb der Kondensatablaufeinrichtung (70) abgeschätzt wird.

7. Kondensatablaufeinrichtung (70), die zum Ableiten von aus einem, insbesondere strömenden, gasförmigen Medium abgeschiedenem Kondensat bereitgestellt ist, aufweisend einen nach oben offenen Kondensatbehälter (72), der einen Aufnahmeraum (73) aufweist, der nach unten durch einen Behälterboden (74), seitlich durch eine Behälterseitenwandung (75) und nach oben durch einen oberen Abschluss (76) mit einer Behälteröffnung (76a) begrenzt ist,

einen Kondensatzulauf (77) im oberen Bereich des Kondensatbehälters (72), der durch die Behälteröffnung (76) gebildet ist,

einen Kondensatablauf (78) im unteren Bereich des Kondensatbehälters (72), insbesondere im Behälterboden (74), über den im Kondensatbehälter (72) angesammeltes Kondensat abgeführt wird,

einen Aufschwimmkörper (82) im Aufnahmeraum (73) des Kondensatbehälters (72), wobei der Aufschwimmkörper (82) derart in dem Aufnahmeraum (73) des Kondensatbehälters (72) angeordnet ist, dass er in der Lage ist, sich zwischen einer unteren Schließposition (84), in der der Aufschwimmkörper (82) den Kondensatablauf (78) verschließt und einer oberen Öffnungsposition (85), in der der Aufschwimmkörper (82) den Kondensatablauf (78) freigibt, zu bewegen, wobei die maximale Ausdehnung (76b) der Behälteröffnung (76a) größer ist als die maximale Ausdehnung (83) des Aufschwimmkörpers (82) und wobei

dass der Aufschwimmkörper (82) und/oder der Kondensatbehälter (82) insbesondere derart ausgebildet ist/sind, dass das Volumen und/oder das Eigengewicht des Aufschwimmkörpers (82) in Abhängigkeit von der Öffnungsfläche (80) des Kondensatablaufs (78) und/oder von der Dichte des Kondensats (88) und/oder von dem am Kondensatzulauf (77) anliegenden Druckniveau (86) und/oder von dem am Kondensatablauf (78) außen anliegenden Druckniveau (87) ausgewählt ist/sind.

8. Systemkomponente (47) eines Systems, insbesondere eines Energiesystems (10), die von einem Gasstrom durchströmt wird oder durchströmbar ist, mit einer Kondensatablaufeinrichtung (70), welche derart bereitgestellt ist, dass sie in der Lage ist, in der Systemkomponente (47) im Gasstrom anfallendes Kondensat zu sammeln und abzuführen, **dadurch gekennzeichnet, dass** die Kondensatablaufeinrichtung (70) nach Anspruch 7 ausgebildet ist.

9. Kondensatablaufeinrichtung oder Systemkomponente nach Anspruch 7 oder 8, **dadurch gekennzeichnet, dass** diese Mittel zur Durchführung des Verfahrens nach einem der Ansprüche 1 bis 6 aufweist.

10. Kondensatablaufeinrichtung oder Systemkomponente nach einem der Ansprüche 7 bis 9, **dadurch gekennzeichnet, dass** der Aufschwimmkörper (82) und/oder der Kondensatbehälter (72) derart ausgebildet ist/sind, dass sich der Aufschwimmkörper (82) aus seiner unteren Schließposition (84) in seine obere Öffnungsposition (85) bewegt, wenn die Bedingung erfüllt ist, dass die Auftriebskraft, $F_{Auftrieb}$, des Aufschwimmkörpers (82) größer ist als die Summe aus Verschlusskraft, $F_{Verschluss}$, in Bezug auf den Kondensatablauf (78) und die Gewichtskraft, $F_G$,

des Aufschwimmkörpers (82) aufgrund dessen Eigengewichts.

11. Kondensatablaufeinrichtung oder Systemkomponente nach einem der Ansprüche 7 bis 10, **dadurch gekennzeichnet, dass** in der Peripherie des Kondensatablaufs (78) innerhalb des Aufnahmeraums (73) des Kondensatbehälters (72) eine Auflageeinrichtung (81) für den Aufschwimmkörper (82), insbesondere lösbar, angeordnet oder ausgebildet ist, und dass die Auflageeinrichtung (81) optional derart bereitgestellt ist, dass sie ein Umspülen des Aufschwimmkörpers (82) mit Kondensat ermöglicht.

12. Kondensatablaufeinrichtung oder Systemkomponente nach einem der Ansprüche 7 bis 11, **dadurch gekennzeichnet, dass** diese eine Einrichtung (91) zur Durchflusserfassung von Kondensat (88) aufweist.

13. Kondensatablaufeinrichtung oder Systemkomponente nach einem der Ansprüche 7 bis 12, **dadurch gekennzeichnet, dass** unterhalb des Kondensatzulaufs (77) in dem Aufnahmeraum (73) des Kondensatbehälters (72) ein Absperrelement (90), insbesondere ein Gitterelement, angeordnet oder ausgebildet ist, welches bereitgestellt ist, damit der Aufschwimmkörper (82) den Aufnahmeraum (73) des Kondensatbehälters (72) nicht verlassen kann.

14. Kondensatablaufeinrichtung oder Systemkomponente nach einem der Ansprüche 7 bis 13, **dadurch gekennzeichnet, dass** zum Zwecke einer individuellen wahlweisen Ausgestaltung zwei oder mehr unterschiedliche Aufschwimmkörper (82) und/oder zwei oder mehr unterschiedliche Auflageeinrichtungen (81) bereitgestellt sind.

15. Energiesystem, insbesondere Gebäudeenergiesystem, aufweisend eine Kondensatablaufeinrichtung (70) oder eine Systemkomponente (47) nach einem der Ansprüche 7 bis 14, oder aufweisend Mittel zur Durchführung des Verfahrens nach einem der Ansprüche 1 bis 6.

**Fig. 1**

Fig. 2

Fig. 4

Fig. 3

**Fig. 5**

EP 4 379 252 A1

Fig. 6

**Fig. 7**

EP 4 379 252 A1

Europäisches
Patentamt

European
Patent Office

Office européen
des brevets

# EUROPÄISCHER RECHERCHENBERICHT

**Nummer der Anmeldung**

EP 23 21 1651

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 627 460 A (EISING JOHN P [US]) 9. Dezember 1986 (1986-12-09) | 1-5, 7-11, 13-15 | INV. F16T1/22 F16T1/48 |
| A | * Spalte 3, Zeile 44 – Spalte 4, Zeile 23; Abbildung 3 * | 6,12 | |
| | ----- | | |
| X | EP 2 447 591 B1 (VAILLANT GMBH [DE]) 27. August 2014 (2014-08-27) | 1-5, 7-11,13, 15 | |
| | * Absätze [0025] – [0027]; Abbildungen 1-3 * | | |
| | ----- | | |
| X | CA 1 098 412 A (TLV CO LTD) 31. März 1981 (1981-03-31) | 1-5, 7-11,13, 15 | |
| | * Seite 2, Zeile 3 – Zeile 121; Abbildungen 1,2 * | | |
| | ----- | | |
| X | US 4 867 767 A (YOKOYAMA TAKESHI [JP]) 19. September 1989 (1989-09-19) | 1-5, 7-11,13, 15 | |
| | * Spalte 2, Zeile 50 – Spalte 4, Zeile 46; Abbildung 1 * | | **RECHERCHIERTE SACHGEBIETE (IPC)** |
| | ----- | | F16T |

Der vorliegende Recherchenbericht wurde für alle Patentansprüche erstellt

| Recherchenort | Abschlußdatum der Recherche | Prüfer |
|---|---|---|
| München | 11. April 2024 | Röberg, Andreas |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 23 21 1651

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-04-2024

| Im Recherchenbericht angeführtes Patentdokument | | Datum der Veröffentlichung | Mitglied(er) der Patentfamilie | | | Datum der Veröffentlichung |
|---|---|---|---|---|---|---|
| US 4627460 | A | 09-12-1986 | GB | 2184827 | A | 01-07-1987 |
| | | | US | 4627460 | A | 09-12-1986 |
| EP 2447591 | B1 | 27-08-2014 | AT | 511054 | A1 | 15-08-2012 |
| | | | DE | 102011116260 | A1 | 03-05-2012 |
| | | | EP | 2447591 | A1 | 02-05-2012 |
| | | | ES | 2522536 | T3 | 14-11-2014 |
| CA 1098412 | A | 31-03-1981 | AU | 509699 | B2 | 22-05-1980 |
| | | | BR | 7803796 | A | 16-01-1979 |
| | | | CA | 1098412 | A | 31-03-1981 |
| | | | DE | 2826090 | A1 | 04-01-1979 |
| | | | FR | 2395457 | A1 | 19-01-1979 |
| | | | GB | 2000274 | A | 04-01-1979 |
| | | | IT | 1096716 | B | 26-08-1985 |
| | | | JP | S547623 | A | 20-01-1979 |
| | | | JP | S5547279 | B2 | 28-11-1980 |
| | | | NL | 7805398 | A | 22-12-1978 |
| | | | ZA | 782615 | B | 25-04-1979 |
| US 4867767 | A | 19-09-1989 | BE | 905442 | A | 16-01-1987 |
| | | | CA | 1273262 | A | 28-08-1990 |
| | | | CH | 671086 | A5 | 31-07-1989 |
| | | | CN | 86105071 | A | 18-03-1987 |
| | | | DE | 8624703 | U1 | 15-01-1987 |
| | | | ES | 2002513 | A6 | 16-08-1988 |
| | | | FR | 2587443 | A1 | 20-03-1987 |
| | | | GB | 2189878 | A | 04-11-1987 |
| | | | GR | 862338 | B | 12-01-1987 |
| | | | JP | H0314119 | B2 | 26-02-1991 |
| | | | JP | S6267397 | A | 27-03-1987 |
| | | | KR | 870002860 | A | 13-04-1987 |
| | | | NZ | 217606 | A | 28-07-1988 |
| | | | PH | 24329 | A | 29-05-1990 |
| | | | PT | 83391 | A | 01-10-1986 |
| | | | US | 4867767 | A | 19-09-1989 |
| | | | ZA | 866051 | B | 25-03-1987 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018133194 A1
- DE 202005019783 U1
- DE 202013009509 U1
- DE 718589 A
- DE 3319196 A1
- EP 2447591 B1
- WO 2017089468 A1
- WO 2017089469 A1